# EUROPÄISCHE PATENTSCHRIFT

(11) **EP 3 538 632 B1**
(45) Veröffentlichungstag und Bekanntmachung des Hinweises auf die Patenterteilung: **24.04.2024**
(21) Anmeldenummer: 17794264.6
(22) Anmeldetag: 20.10.2017
(51) Int. Cl.: C11D 3/386, C11D 1/22, C11D 1/29, C11D 1/72

(54) **TENSIDZUSAMMENSETZUNG ENTHALTEND EINE AMYLASE**
DETERGENT COMPOSITION COMPRISING AMYLASE
COMPOSITION DÉTERGENTE COMPRENANT DE L'AMYLASE

(30) Priorität: 08.11.2016 DE 102016221849
(43) Veröffentlichungstag der Anmeldung: 18.09.2019
(73) Patentinhaber: Henkel AG & Co. KGaA, 40589 Düsseldorf (DE)
(72) Erfinder: SEILER, Martina, 47228 Duisburg (DE); O'CONNELL, Timothy, 86899 Landsberg am Lech (DE); NICKEL, Dieter, 50259 Pulheim (DE)
(86) Internationale Anmeldenummer: PCT/EP2017/076855
(87) Internationale Veröffentlichungsnummer: WO 2018/086846

(56) Entgegenhaltungen:
- WO-A1-2014/183921
- WO-A2-00/43476
- DE-A1-102005 062 984
- MORRIS T C ET AL: "FORMULATING LIQUID DETERGENTS FOR MULTIPLE ENZYME STABILITY", HAPPI HOUSEHOLD AND PERSONAL PRODUCTS INDUSTRY, RODMAN PUBLISHING, RAMSEY, NJ, US, Bd. 41, Nr. 1, 1. Januar 2004 (2004-01-01) , Seiten 92,94,96-98, XP001185775, ISSN: 0090-8878

## Beschreibung

Die vorliegende Erfindung liegt auf dem Gebiet der Enzymtechnologie, insbesondere der Optimierung von Tensid-Enzym Gemischen, wie sie zum Beispiel in Wasch- oder Reinigungsmitteln, verwendet werden. Die Erfindung betrifft eine flüssige Tensidzusammensetzung enthaltend ein Tensidgemisch, Wasser, und mindestens eine Amylase, wie hierin definiert. Ferner betrifft die vorliegende Erfindung ein Verfahren zur Reinigung von Textilien oder harten Oberflächen unter Verwendung der erfindungsgemäßen Tensidzusammensetzung.

Amylasen gehören zu den technisch bedeutenden Enzymen. Ihr Einsatz für Wasch- und Reinigungsmittel ist industriell etabliert und sie können in modernen, leistungsfähigen Wasch- und Reinigungsmitteln enthalten sein. DE102005062984 und WO2014183921 beschreiben Waschmittelzusammensetzungen mit Amylasevarianten.

Amylasen werden unterteilt in α-, β-, γ- und Isoamylasen. Amylasen werden als Hydrolase (ein Enzym, das hydrolytisch spaltet) oder auch als Glykosidase (ein Enzym, das Polysaccharide spaltet) eingestuft. α-Amylasen (EC 3.2.1.1) spalten innere α(1-4)-Glykosidbindungen der Amylose, nicht jedoch terminale oder α(1-6)-Glykosidbindungen. Dadurch entstehen Maltose, Maltotriose und verzweigte Oligosaccharide. β-Amylasen (EC 3.2.1.2) spalten in Sacchariden vom Kettenende her jeweils ein Maltosemolekül ab. γ-Amylasen (EC 3.2.1.3) spalten in Sacchariden vom Kettenende her jeweils ein β-D-Glucose Molekül ab. Isoamylasen (EC 3.2.1.68) kommen nur in Pflanzen und Bakterien vor und spalten die 1,6-glykosidischen Verzweigungen von Glycogen und Amylopectin. Die in den aus dem Stand der Technik bekannten Wasch- oder Reinigungsmitteln eingesetzten Amylasen sind üblicherweise mikrobiellen Ursprungs und stammen in der Regel aus Bakterien oder Pilzen, beispielsweise der Gattungen *Bacillus, Pseudomonas, Acinetobacter, Micrococcus, Humicola, Trichoderma* oder *Trichosporon,* insbesondere *Bacillus.* Amylasen werden üblicherweise nach an sich bekannten biotechnologischen Verfahren durch geeignete Mikroorganismen produziert, beispielsweise durch transgene Expressionswirte der Gattungen *Bacillus* oder durch filamentöse Pilze.

Im Vergleich zu Europa sind in anderen Ländern, wie beispielsweise den USA, die Waschbedingungen, insbesondere im Hinblick auf Temperatur und Waschzeit, stark verschieden. Beispielsweise ist die Waschtemperatur deutlich niedriger (Waschgänge ohne Aufheizen) und auch die Waschzeit ist deutlich verkürzt (ca. 10 min im Vergleich zu ca. 30 min; reine Waschzeit ohne Spülgänge).

Es ist eine Herausforderung bei derartig kurzen Waschzeiten und vergleichsweise niedrigen Temperaturen eine optimale Waschperformance in Bezug auf Fleckentfernung und auch Weißgrad zu erreichen. Verkompliziert wird die Lage dadurch, dass in anderen Ländern, wie beispielsweise den USA, aufgrund von gesetzlichen Vorschriften nicht auf alle Inhaltsstoffe, die üblicherweise in z.B. europäischen Waschmitteln eingesetzt werden, und die zur Waschperformance beitragen zurückgegriffen werden kann (wie z.B. Phosphor-haltige Inhaltsstoffe, insbesondere P-haltige Komplexbilder wie Phosphonate).

Zusätzlich ist es wünschenswert, dass die Performance des Waschmittels über einen längeren Zeitraum gleich bleibt. Gängige Enzyme unterliegen aber je nach Lagerbedingungen und abhängig von der Wahl der Tenside einer Inaktivierung und gehen damit für die Waschleistung verloren.

Nötig für eine optimale Stabilität und Reinigungsleistung der einzelnen Inhaltsstoffe ist daher eine optimierte Kombination von Tensid/Tensidmischung auf der einen Seite und Enzym/Enzymmischung auf der anderen Seite. Derartige optimale Zusammensetzungen müssen für jedes Enzym oder Enzymmischung individuell gefunden werden. Es besteht daher Bedarf an einer lagerstabilen Tensidmischung die mit einer Amylase kompatibel ist und deren Aktivität auch bei höheren Tensidkonzentration nicht oder nicht signifikant verringert bzw. einer Amylase, die gegenüber Referenzamylasen unter derartigen Bedingungen einer verbesserte Leistung/Stabilität zeigt.

Es wurde nun überraschenderweise gefunden, dass die Verwendung einer Amylase gemäß SEQ ID NO:1 nach Lagerung in Gegenwart hoher Tensidkonzentrationen für mehrere Wochen im Vergleich zu einer Referenzamylase zu verbesserten Waschleistungen führt.

Daher richtet sich in einem ersten Aspekt die vorliegende Erfindung auf eine flüssige Tensidzusammensetzung, enthaltend bezogen auf das Gesamtgewicht der Zusammensetzung
a) 2,0 bis 8,0 Gew.-% C₉-C₂₀-Alkylbenzolsulfonat;
b) 10,0 bis 18,0 Gew.-% R¹-O-(CH₂CH₂O)ₙ-SO₃M,
   worin R¹ für eine C₁₂₋₁₈-Alkylgruppe steht, n für eine Zahl von 2 bis 3 steht und M für ein einwertiges Kation steht;
c) 1,0 bis 6,0 Gew.-% R²-O-(CH₂CH₂O)ₘ-SO₃M',
   worin R² für eine C₁₂₋₁₈-Alkylgruppe steht, m für eine Zahl von 7 bis 8 steht und M' für ein einwertiges Kation steht;
d) eine Gesamtmenge von 2,0 bis 10,0 Gew.-%, vorzugsweise 2,5 bis 7,5 Gew.-%, weiter bevorzugt 4,0 bis 6,0 Gew.-% Fettalkoholethoxylat(e);
e) Wasser; und
f) mindestens eine Amylase,
wobei die Amylase eine Aminosäuresequenz umfasst, die mindestens 75 % Sequenzidentität mit der in SEQ ID NO:1 angegebenen Aminosäuresequenz über deren Gesamtlänge aufweist.

In einem weiteren Aspekt richtet sich die vorliegende Erfindung auf Verfahren zur Reinigung von Textilien, dadurch gekennzeichnet, dass in mindestens einem Verfahrensschritt eine erfindungsgemäße flüssige Tensidzusammensetzung angewendet wird.

In noch einem Aspekt richtet sich die vorliegende Erfindung ferner auf die Verwendung einer wie hierin beschriebenen, flüssigen Tensidzusammensetzung, vorzugsweise ein Wasch- oder Reinigungsmittel, zur Entfernung von Anschmutzungen.

Im Sinne der Erfindung gilt für die Definition eines Zahlenbereichs, welcher "zwischen" zwei Bereichsgrenzen liegen soll, dem allgemeinen Sprachgebrauch folgend, dass die die Bereichsgrenzen nicht mit eingeschlossen sind. Zahlenbereiche, die von einer Bereichsgrenze bis zu einer anderen Bereichsgrenze definiert sind, schließen die Bereichsgrenzen mit ein.

Alle Mengenangaben aus a), b) und c) werden mit Natrium als Gegenion bzw. einwertiges Kation M und M` berechnet. Bei Einsatz von einwertigen Kationen M oder M` die von Natrium verschieden sind, ist die Gewichtsmenge daher entsprechend auf Natrium als einwertiges Kation umzurechnen.

"Mindestens ein", wie hierin verwendet, schließt ein, ist aber nicht begrenzt auf, 1, 2, 3, 4, 5, 6 und mehr.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung/Zusammensetzung.

Im Rahmen der vorliegenden Erfindung stehen Fettsäuren bzw. Fettalkohole bzw. deren Derivate - soweit nicht anders angegeben - stellvertretend für verzweigte oder unverzweigte Carbonsäuren bzw. Alkohole bzw. deren Derivate mit vorzugsweise 6 bis 22 Kohlenstoffatomen. Insbesondere sind auch die beispielsweise nach der *Roelenschen* Oxo-Synthese erhältlichen Oxo-Alkohole bzw. deren Derivate entsprechend einsetzbar. Wann immer im Folgenden Erdalkalimetalle als Gegenionen für einwertige Anionen genannt sind, so bedeutet das, dass das Erdalkalimetall natürlich nur in der halben - zum Ladungsausgleich ausreichenden - Stoffmenge wie das Anion vorliegt.

Die erfindungsgemäße Zusammensetzung ist bei 25°C und 1013 mbar flüssig.

Die erfindungsgemäße Tensidzusammensetzung enthält 2,0 bis 8,0 Gew.-% C₉-C₂₀-Alkylbenzolsulfonat, bevorzugt C₁₀-C₁₅-Alkylbenzolsulfonat, besonders bevorzugt C₁₀-C₁₃-Alkylbenzolsulfonat.

Bei den Alkylbenzolsulfonattensiden steht "Alkyl" vorzugsweise für einen linearen oder verzweigten unsubstituierten Alkylrest. Solche äußerst bevorzugten Tenside a) sind ausgewählt aus linearen oder verzweigten Alkylbenzolsulfonaten der Formel a 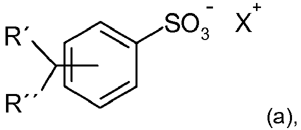 in der R' und R" zusammen 8 bis 19, vorzugsweise 9 bis 14 und insbesondere 9 bis 12 C-Atome enthalten und X⁺ für ein einwertiges Kation, insbesondere für Na⁺, K⁺, HO-CH₂CH₂NH₃⁺ oder (HOCH₂CH₂)₃NH⁺ steht. Ein ganz besonders bevorzugter Vertreter lässt sich durch die Formel a-1 beschreiben:

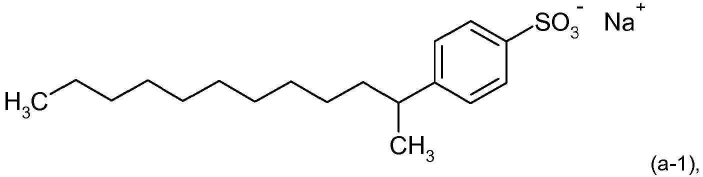

Am bevorzugtesten ist der Einsatz von einer Gesamtmenge von 2,0 bis 8,0 Gew.-% C₁₀-C₁₃-Alkylbenzolsulfonat Natriumsalz. Am aller bevorzugtesten ist der Einsatz von einer Gesamtmenge von 2,0 bis 8,0 Gew.-% C₁₂-Alkylbenzolsulfonat Natriumsalz.

Ferner enthält die erfindungsgemäße flüssige Tensidzusammensetzung 10,0 bis 18,0 Gew.-% R¹-O-(CH₂CH₂O)ₙ-SO₃M, worin R¹ für eine C₁₂₋₁₈-Alkylgruppe steht, n für 2 oder 3 steht und M für ein einwertiges Kation steht. Dabei handelt es sich um ein C₁₂-C₁₈-Alkylsulfat mit dem einwertigen Gegenion M und 2 oder 3 Mol Ethylenoxid pro Mol C₁₂-C₁₈-Alkylgruppe.

Besonders bevorzugt steht n für 2.

Besonders bevorzugt steht M für Na⁺, K⁺, HO-CH₂CH₂NH₃⁺ oder (HO-CH₂CH₂)₃NH⁺, ganz besonders bevorzugt für Na⁺.

Am bevorzugtesten enthält die erfindungsgemäße flüssige Tensidzusammensetzung eine Gesamtmenge von 10,0 bis 18,0 Gew.-% R¹-O-(CH₂CH₂O)₂-SO₃Na, worin R¹ für eine C₁₂₋₁₈-Alkylgruppe, insbesondere für Dodecyl, steht.

Ferner enthält die erfindungsgemäße flüssige Tensidzusammensetzung 1,0 bis 6,0 Gew.-% R²-O-(CH₂CH₂O)ₘ-SO₃M', worin R² für eine C₁₂₋₁₈-Alkylgruppe steht, m für 7 oder 8 steht und M` für ein einwertiges Kation steht. Dabei handelt es sich um ein C₁₂-C₁₈-Alkylsulfat mit dem einwertigen Gegenion M und 7 oder 8 Mol Ethylenoxid pro Mol C₁₂-C₁₈-Alkylgruppe.

Besonders bevorzugt steht m für 7.

Besonders bevorzugt steht M' für Na⁺, K⁺, HO-CH₂CH₂NH₃⁺ oder (HO-CH₂CH₂)₃NH⁺, ganz besonders bevorzugt für Na⁺.

Am bevorzugtesten enthält die erfindungsgemäße flüssige Tensidzusammensetzung 1,0 bis 6,0 Gew.-% R²-O-(CH₂CH₂O)₇-SO₃Na, worin R² für eine C₁₂₋₁₈-Alkylgruppe, insbesondere für Dodecyl, steht.

Es hat sich für die Kaltwaschleistung als vorteilhaft erwiesen, wenn die Zusammensetzungen als anionisches Tensid zusätzlich Seife(n) enthalten. Seifen sind die wasserlöslichen Natrium- oder Kaliumsalze der gesättigten und ungesättigten Fettsäuren mit 10 bis 20 Kohlenstoffatomen, der Harzsäuren des Kolophoniums (gelbe Harzseifen) und der Naphthensäuren, die als feste oder halbfeste Gemische in der Hauptsache für Wasch- und Reinigungszwecke verwendet werden. Natrium- oder Kaliumsalze der gesättigten und ungesättigten Fettsäuren mit 10 bis 20 Kohlenstoffatomen, insbesondere mit 12 bis 18 Kohlenstoffatomen, sind gemäß Erfindung bevorzugte Seifen. Besonders bevorzugte Zusammensetzungen sind dabei dadurch gekennzeichnet, dass sie - bezogen auf ihr Gewicht - 0,1 bis 15 Gew.-%, besonders bevorzugt 0,2 bis 12,0 Gew.-%, ganz besonders bevorzugt 0,3 bis 10,0 Gew.-% Seife(n) enthalten.

Die erfindungsgemäße Tensidzusammensetzung enthält ferner 2,0 bis 10,0 Gew.-%, vorzugsweise 2,5 bis 7,5 Gew.-%, weiter bevorzugt 4,0 bis 6,0 Gew.-%, Fettalkoholethoxylat(e).

Mit besonderem Vorzug enthalten die Zusammensetzungen mindestens ein Fettalkoholethoxylat(e) der Formel R³-O-(CH₂CH₂O)ₒ-H, worin R³ für eine C₁₂₋₁₈ Alkylgruppe steht und o für eine Zahl von 7 bis 8 steht. Diese Tenside ergeben auch bei niedrigen Waschtemperaturen leistungsstarke Zusammensetzungen und weisen im Falle flüssiger Zubereitungen exzellente Kältestabilität auf.

Ganz besonders bevorzugte Zusammensetzungen enthalten als nichtionisches Tensid bezogen auf die Gesamtmenge der Zusammensetzungen 2,0 bis 10 Gew.-%, vorzugsweise 2,5 bis 7,5 Gew.-%, weiter bevorzugt 4,0 bis 6,0 Gew.-% Fettalkoholethoxylat(e).

Es ist erfindungsgemäß bevorzugt, wenn in der erfindungsgemäßen flüssigen Tensidzusammensetzung das Gewichtsverhältnis der Tensidkomponente a) zur Tensidkomponente b) 1:9 bis 1:2, bevorzugt 1:6 bis 1:3, besonders bevorzugt 1:5 bis 1:3, beträgt.

Es ist erfindungsgemäß bevorzugt, wenn in der erfindungsgemäßen flüssigen Tensidzusammensetzung das Gewichtsverhältnis der Tensidkomponente a) zur Tensidkomponente c) 2:1 bis 1:2, bevorzugt 2:1 bis 1:1, besonders bevorzugt 1.5:1 bis 1:1 beträgt.

Es ist erfindungsgemäß bevorzugt, wenn in der erfindungsgemäßen flüssigen Tensidzusammensetzung das Gewichtsverhältnis der Tensidkomponente a) zur Tensidkomponente d) 2:1 bis 1:5, bevorzugt 1.5:1 bis 1:3, besonders bevorzugt 1:1 bis1:2, beträgt.

Die erfindungsgemäße Zusammensetzung enthält als Lösemittel Wasser. Dabei ist es erfindungsgemäß bevorzugt, bezogen auf das Gewicht der Zusammensetzung Wasser in einer Gesamtmenge von 20 bis 80 Gew.-%, insbesondere von 30 bis 70 Gew.-%, ganz besonders bevorzugt von 40 bis 60 Gew.-%, einzusetzen.

Neben den erfindungsgemäß zwingend vorhandenen Komponenten können der erfindungsgemäßen flüssigen Zusammensetzung organische Lösemittel zugesetzt werden. Organische Lösemittel sind flüssig, lösen sich bei 20°C zu mindestens 1 g in 100 g destilliertem Wasser und weisen im Molekül mindestens eine kovalente Bindung zwischen Kohlenstoff und Wasserstoff auf. Es ist erfindungsgemäß bevorzugt, bezogen auf das Gewicht der Zusammensetzung Aminogruppen-freie organische Lösemittel in einer Gesamtmenge von 0 bis 10 Gew.-%, insbesondere von 0 bis 7,5 Gew.-%, einzusetzen. Geeignete Aminogruppen-freie organische Lösemittel umfassen ein- oder mehrwertige Alkohole oder Glykolether, sofern sie im angegebenen Konzentrationsbereich mit Wasser mischbar sind. Vorzugsweise werden die Aminogruppen-freien organischen Lösemittel ausgewählt aus Ethanol, n-Propanol, i-Propanol, Butanolen, Glykol, Propandiol, Butandiol, Methylpropandiol, Glycerin, Diglykol, Propyldiglycol, Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Dipropylenglykolmonomethylether, Dipropylenglykolmonoethylether, Methoxytriglykol, Ethoxytriglykol, Butoxytriglykol, 1-Butoxyethoxy-2-propanol, 3-Methyl-3-methoxybutanol, Propylenglykol-t-butylether, Di-n-octylether sowie aus Mischungen zweier oder mehrerer dieser vorgenannten Lösemittel. Es ist allerdings bevorzugt, dass die erfindungsgemäße Zusammensetzung optional einen Aminogruppen-freien C₂ bis C₄-Alkohol mit 1 bis 3 Hydroxylgruppen, insbesondere Ethanol und/oder Glycerin und/oder 1,2-Propandiol, enthält.

Die erfindungsgemäße Zusammensetzung enthält zwingend mindestens eine Amylase. Diese Amylase ist eine α-Amylase und umfasst eine Aminosäuresequenz, die mindestens 75 % Sequenzidentität mit der in SEQ ID NO:1 angegebenen Aminosäuresequenz über deren Gesamtlänge aufweist. α-Amylasen (E.C. 3.2.1.1) hydrolysieren als Enzym interne α-1,4-glycosidische Bindungen von Stärke und stärkeähnlichen Polymeren.

In verschiedenen Ausführungsformen der Erfindung umfasst die Amylase eine Aminosäuresequenz, die zu der in SEQ ID NO:1 angegebenen Aminosäuresequenz über deren Gesamtlänge zu mindestens 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 98,8%, 99,0%, 99,2%, 99,4%, 99,6%, 99,8% oder zu 100,0% identisch ist.

Die Menge an einer solchen Amylase beträgt typischerweise 0,01 bis 2 Gew.-% bezogen auf aktives Protein.

Zusätzlich zur Amylase kann die erfindungsgemäße flüssige Tensidzusammensetzung ferner eine Protease enthalten ist. Eine Protease ist ein Enzym, das Peptidbindungen mittels Hydrolyse spaltet. Jedes der Enzyme aus der Klasse E.C. 3.4 fällt erfindungsgemäß darunter (umfassend jede der darunterfallenden dreizehn Unterklassen). Die EC-Nummer entspricht der Enzyme Nomenklatur 1992 der NC-IUBMB, Academic Press, San Diego, California, eingeschlossen der Ergänzungen 1 bis 5, publiziert in Eur. J. Biochem. 1994, 223, 1-5; Eur. J. Biochem. 1995, 232, 1-6; Eur. J. Biochem. 1996, 237, 1-5; Eur. J. Biochem. 1997, 250, 1-6; and Eur. J. Biochem. 1999, 264, 610-650.

Subtilase benennt eine Untergruppe der Serinproteasen. Die Serinproteasen oder Serinpeptidasen sind eine Untergruppe der Proteasen, die Serin im aktiven Zentrums des Enzyms besitzen, das ein kovalentes Addukt mit dem Substrat bildet. Weiterhin sind die Subtilasen (und die Serineproteasen) dadurch charakterisiert, dass sie neben besagtem Serin mit Histidin und Aspartam zwei weitere Aminosäurereste im aktiven Zentrum aufweisen. Die Subtilasen können in 6 Unterklassen, nämlich die Subtilisin Familie, die Thermitase Familie, die Proteinase K Familie, die Familie der lantibiotischen Peptidasen, die Kexin Familie und die Pyrolysin Familie. Die als Bestandteil der erfindungsgemäßen Zusammensetzungen bevorzugt ausgenommenen oder bevorzugt in reduzierten Mengen enthaltenen Proteasen sind Endopeptidasen (EC 3.4.21).

"Proteaseaktivität" liegt erfindungsgemäß vor, wenn das Enzym proteolytische Aktivität besitzt (EC 3.4). Verschiedenartige Proteaseaktivitäts-Typen sind bekannt: Die drei Haupttypen sind: Trypsin-artig, wobei eine Spaltung des Amidesubstrates nach den Aminosäuren Arg oder Lys bei P1 erfolgt; Chymotrypsin-artig, wobei eine Spaltung nach einer der hydrophoben Aminosäuren bei P1 erfolgt; und Elastase-artig, wobei eine Spaltung des Amidsubstrates nach Ala bei P1 erfolgt.

Die Proteaseaktivität kann nach der in Tenside, Band 7 (1970), S. 125-132 beschriebenen Methode ermittelt werden. Sie wird dementsprechend in PE (Protease-Einheiten) angegeben. Die Proteaseaktivität eines Enzyms lässt sich gemäß gängigen Standardmethoden, wie insbesondere unter Einsatz von BSA als Substrat (Rinderalbumin) und/oder mit der AAPF-Methode.

Überraschenderweise wurde festgestellt, dass eine Protease vom Typ der alkalischen Protease aus Bacillus lentus DSM 5483 oder eine hierzu hinreichend ähnliche Protease (bezogen auf die Sequenzidentität), die mehrere dieser Veränderungen in Kombination aufweist, besonders für den Einsatz in der erfindungsgemäßen flüssigen Tensidzusammensetzung geeignet und darin vorteilhafterweise verbessert stabilisiert wird. Vorteile des Einsatzes dieser Protease ergeben sich somit insbesondere hinsichtlich der Waschleistung und/oder der Stabilität.

Eine besonders bevorzugte Ausführungsform der Erfindung ist besagte flüssige Tensidzusammensetzung, enthaltend als Enzym eine Amylase, wie oben definiert, und mindestens eine Protease umfassend eine Aminosäuresequenz, die zu der in SEQ ID NO:2 angegebenen Aminosäuresequenz über deren Gesamtlänge zu mindestens 70% identisch ist und in der Zählung gemäß SEQ ID NO:2 die Aminosäuresubstitution R99E oder R99D in Kombination mit mindestens zwei weiteren Aminosäuresubstitutionen aufweist, die ausgewählt sind aus der Gruppe bestehend aus S3T, V4I und V199I. Besagte Protease wird in der Druckschrift WO 2013/060621 beschrieben, sowie das Verfahren zur Herstellung besagter Protease, umfassend das Einbringen einer Aminosäuresubstitution R99E oder R99D in Kombination mit mindestens zwei weiteren Aminosäuresubstitutionen, die ausgewählt sind aus der Gruppe bestehend aus S3T, V4I und V199I, in der Zählung gemäß SEQ ID NO:2 in eine Ausgangsprotease, die zu der in SEQ ID NO:2 angegebenen Aminosäuresequenz über deren Gesamtlänge zu mindestens 70% identisch ist.

Eine weitere besonders bevorzugte Ausführungsform der Erfindung ist besagte flüssige Tensidzusammensetzung, enthaltend als Enzym eine Amylase, wie oben definiert, und mindestens eine Protease umfassend eine Aminosäuresequenz, die zu der in SEQ ID NO:2 angegebenen Aminosäuresequenz über deren Gesamtlänge zu mindestens 70% identisch ist und in der Zählung gemäß SEQ ID NO:2 die Aminosäuresubstitution R99E in Kombination mit mindestens einer weiteren Aminosäuresubstitution an den Positionen 154 und 256 aufweist. Besonders bevorzugt sind hier die Substitutionen S154D und L256E, wobei eine besonders bevorzugte Protease die Aminosäuresequenz gemäß SEQ ID NO:2 aufweist, die zusätzlich die Aminosäuresubstitutionen R99E in Kombination mit den Substitutionen S154D und L256E aufweist. Weitere besonders bevorzugte Proteasen für den Einsatz in der erfindungsgemäßen flüssigen Tensidzusammensetzung sind in der Druckschrift WO2016/096714 offenbart.

Eine bevorzugte Protease im Sinne der vorliegenden Patentanmeldung umfasst sowohl die Protease als solche als auch eine mit einem erfindungsgemäßen Verfahren hergestellte Protease. Alle Ausführungen zur Protease beziehen sich daher sowohl auf die Protease als Stoff wie auch auf die entsprechenden Verfahren, insbesondere Herstellungsverfahren der Protease.

Als weitere Erfindungsgegenstände sind mit den erfindungsgemäß bevorzugten Proteasen beziehungsweise den Herstellungsverfahren für erfindungsgemäße Proteasen für diese Proteasen codierende Nukleinsäuren, erfindungsgemäße Proteasen oder Nukleinsäuren enthaltende nicht menschliche Wirtszellen sowie erfindungsgemäße Proteasen umfassende flüssige Tensidzusammensetzungen, Wasch- und Reinigungsverfahren verbunden.

Eine erfindungsgemäße Veränderung der Position 99, nämlich eine Veränderung R99E oder R99D, in Verbindung mit einer Veränderung an mindestens zwei der Positionen 3, 4 und 199, nämlich S3T, V4I oder V199I, in einer Protease, die eine zu der in SEQ ID NO:2 angegebenen Aminosäuresequenz zu mindestens 70% identische Aminosäuresequenz umfasst, bewirkt vorzugsweise eine verbesserte Reinigungsleistung dieser veränderten Protease in Wasch- und Reinigungsmitteln an mindestens einer protease-sensitiven Anschmutzung.

Eine erfindungsgemäße Veränderung der Position 99, nämlich eine Veränderung R99E, in Verbindung mit einer Veränderung an mindestens einer der Positionen 154 und 256, besonders bevorzugt sind hier die Substitutionen S154D und L256E, in einer Protease, die eine zu der in SEQ ID NO:2 angegebenen Aminosäuresequenz zu mindestens 70% identische Aminosäuresequenz umfasst, bewirkt vorzugsweise eine verbesserte Reinigungsleistung dieser veränderten Protease in Wasch- und Reinigungsmitteln an mindestens einer protease-sensitiven Anschmutzung.

Dies gilt für die erfindungsgemäße flüssige Tensidzusammensetzung insbesondere bei einem Einsatz bei niedrigen Temperaturen von bis zu 10°C. Erfindungsgemäße Proteasen ermöglichen folglich eine verbesserte Entfernung von mindestens einer, bevorzugt von mehreren protease-sensitiven Anschmutzungen auf Textilien und/oder harten Oberflächen, beispielsweise Geschirr.

Besonders vorteilhafte Reinigungsleistungen zeigen bevorzugte Ausführungsformen erfindungsgemäßer Proteasen an Blut-haltigen Anschmutzungen, beispielsweise an den Anschmutzungen Blut auf Baumwolle: Produkt Nr. 111 erhältlich von der Firma Eidgenössische Material- und Prüfanstalt (EMPA) Testmaterialien AG, St. Gallen, Schweiz; Milch-Ruß auf Baumwolle (wfk - Cleaning Technology Institute e.V., Krefeld, Deutschland); Blut-Milch/Tusche auf Baumwolle: Produkt Nr. C-05 erhältlich von CFT (Center For Testmaterials) B.V. Vlaardingen, Niederlande.

Bevorzugte Ausführungsformen der besagten Tensidzusammensetzungen mit besagter Amylase und ggf. bevorzugter schmutzspezifischer Protease erzielen die vorteilhaften Reinigungsleistungen bei niedrigen Temperaturen zwischen 10°C und 60°C, zwischen 15°C und 50°C und zwischen 20°C und 40°C. Folglich werden besonders bevorzugte Ausführungsformen der besagten Tensidzusammensetzungen mit besagter Amylase und ggf. bevorzugter schmutzspezifischer Protease bereitgestellt, deren Reinigungsleistung gezielt im Hinblick auf eine Anschmutzung oder auf mehrere Anschmutzungen ähnlichen Typs, insbesondere bei Temperaturen von höchstens 25°C, besonders bevorzugt bei Temperaturen von höchstens 20°C vorteilhaft ist.

Ferner verfügen bevorzugte Ausführungsformen der in der erfindungsgemäßen Tensidzusammensetzung eingesetzten Amylase über eine besondere Stabilität in Wasch- oder Reinigungsmitteln, beispielsweise gegenüber Tensiden und/oder Bleichmitteln und/oder gegenüber Temperatureinflüssen, insbesondere gegenüber hohen Temperaturen, beispielsweise zwischen 50 und 65°C, insbesondere 60°C, und/oder gegenüber sauren oder alkalischen Bedingungen und/oder gegenüber pH-Wert-Änderungen und/oder gegenüber denaturierenden oder oxidierenden Agentien und/oder gegenüber proteolytischem Abbau und/oder gegenüber einer Veränderung der Redox-Verhältnisse. Solche vorteilhaften Ausführungsformen erfindungsgemäßer Amylasen ermöglichen folglich verbesserte Waschergebnisse an Amylase-sensitiven Anschmutzungen in einem weiten Temperaturbereich.

Unter Reinigungsleistung wird im Rahmen der Erfindung die Aufhellungsleistung an einer oder mehreren Anschmutzungen, insbesondere auf Wäsche oder Geschirr, verstanden. Im Rahmen der Erfindung weist sowohl das Wasch- oder Reinigungsmittel, welches die Amyalse umfasst beziehungsweise die durch dieses Mittel gebildete Wasch- oder Reinigungsflotte, als auch die Amylase selbst eine jeweilige Reinigungsleistung auf. Die Reinigungsleistung des Enzyms trägt somit zur Reinigungsleistung des Mittels beziehungsweise der durch das Mittel gebildeten Wasch- oder Reinigungsflotte bei. Die Reinigungsleistung wird bevorzugt ermittelt wie weiter unten angegeben.

In einer weiteren Ausführungsform der Erfindung umfasst die Protease eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99E in Kombination mit mindestens zwei weiteren Aminosäuresubstitutionen aufweist, die ausgewählt sind aus der Gruppe bestehend aus S3T, V4I und V199I.

In einer weiteren Ausführungsform der Erfindung umfasst die Protease eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99D in Kombination mit mindestens zwei weiteren Aminosäuresubstitutionen aufweist, die ausgewählt sind aus der Gruppe bestehend aus S3T, V4I und V199I.

In einer weiteren Ausführungsform der Erfindung umfasst die Protease eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99E in Kombination mit mindestens einer weiteren Aminosäuresubstitution an den Positionen 154 und 256 aufweist. Besonders bevorzugt sind hier die Substitutionen S154D und L256E.

Besonders bevorzugte erfindungsgemäße Proteasen sind:
Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99E in Kombination mit mindestens einer weiteren Aminosäuresubstitution an den Positionen 154 und 256 aufweist.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99E in Kombination mit S154D und einer weiteren Aminosäuresubstitution an der Position 256, bevorzugt L256E, aufweist.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99E in Kombination mit L256E und einer weiteren Aminosäuresubstitution an der Position 154, bevorzugt S154D aufweist.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99E in Kombination mit den Aminosäuresubstitutionen S3T und V4I aufweist, insbesondere eine Protease gemäß SEQ ID NO:2 mit den Aminosäuresubstitutionen S3T, V4I und R99E.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99E in Kombination mit den Aminosäuresubstitutionen S3T und V199I aufweist, insbesondere eine Protease gemäß SEQ ID NO:2 mit den Aminosäuresubstitutionen S3T, R99E und V199I.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99E in Kombination mit den Aminosäuresubstitutionen V4I und V199I aufweist, insbesondere eine Protease gemäß SEQ ID NO:2 mit den Aminosäuresubstitutionen V4I, R99E und V199I.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99D in Kombination mit den Aminosäuresubstitutionen S3T und V4I aufweist, insbesondere eine Protease gemäß SEQ ID NO:2 mit den Aminosäuresubstitutionen S3T, V4I und R99D.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99D in Kombination mit den Aminosäuresubstitutionen S3T und V199I aufweist, insbesondere eine Protease gemäß SEQ ID NO:2 mit den Aminosäuresubstitutionen S3T, R99D und V199I.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5% und 98,8% identisch ist, und in der Zählung gemäß SEQ ID NO:2 die Aminosäuresubstitution R99D in Kombination mit den Aminosäuresubstitutionen V4I und V199I aufweist, insbesondere eine Protease gemäß SEQ ID NO:2 mit den Aminosäuresubstitutionen V4I, R99D und V199I.

Weitere besonders bevorzugte Ausführungsformen erfindungsgemäßer Proteasen zeichnen sich dadurch aus, dass sie die Aminosäuresubstitution R99E oder R99D in Kombination mit den drei weiteren Aminosäuresubstitutionen S3T, V4I und V199I aufweisen. Insbesondere folgende Proteasen sind diesbezüglich ganz besonders bevorzugt:
Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98% und 98,5% identisch ist, und in der Zählung gemäß SEQ ID NO:2 die Aminosäuresubstitution R99E in Kombination mit den Aminosäuresubstitutionen S3T, V4I und V199I aufweist, insbesondere eine Protease gemäß SEQ ID NO:2 mit den Aminosäuresubstitutionen S3T, V4I, R99E und V199I.

Protease umfassend eine Aminosäuresequenz, die zu der in SEQ ID NO:2 angegebenen Aminosäuresequenz über deren Gesamtlänge zu mindestens 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98% und 98,5% identisch ist, und in der Zählung gemäß SEQ ID NO:2 die Aminosäuresubstitution R99D in Kombination mit den Aminosäuresubstitutionen S3T, V4I und V199I aufweist, insbesondere eine Protease gemäß SEQ ID NO:2 mit den Aminosäuresubstitutionen S3T, V4I, R99D und V199I.

Weitere besonders bevorzugte Proteasen sind Proteasen wie vorstehend beschrieben, die ferner an Position 211 in der Zählung gemäß SEQ ID NO:2 die Aminosäure Leucin (L) aufweisen.

Die Menge an einer solchen Protease beträgt typischerweise 0,01 bis 2 Gew.-% bezogen auf aktives Protein.

Die Bestimmung der Identität von Nukleinsäure- oder Aminosäuresequenzen erfolgt durch einen Sequenzvergleich. Dieser Sequenzvergleich basiert auf dem im Stand der Technik etablierten und üblicherweise genutzten BLAST-Algorithmus (vgl. beispielsweise Altschul, S.F., Gish, W., Miller, W., Myers, E.W. & Lipman, D.J. (1990) "Basic local alignment search tool." J. Mol. Biol. 215:403-410, und Altschul, Stephan F., Thomas L. Madden, Alejandro A. Schaffer, Jinghui Zhang, Hheng Zhang, Webb Miller, and David J. Lipman (1997): "Gapped BLAST and PSI-BLAST: a new generation of protein database search programs"; Nucleic Acids Res., 25, S.3389-3402) und geschieht prinzipiell dadurch, dass ähnliche Abfolgen von Nukleotiden oder Aminosäuren in den Nukleinsäure- oder Aminosäuresequenzen einander zugeordnet werden. Eine tabellarische Zuordnung der betreffenden Positionen wird als Alignment bezeichnet. Ein weiterer im Stand der Technik verfügbarer Algorithmus ist der FASTA-Algorithmus. Sequenzvergleiche (Alignments), insbesondere multiple Sequenzvergleiche, werden mit Computerprogrammen erstellt. Häufig genutzt werden beispielsweise die Clustal-Serie (vgl. beispielsweise Chenna et al. (2003): Multiple sequence alignment with the Clustal series of programs. Nucleic Acid Research 31, 3497-3500), T-Coffee (vgl. beispielsweise Notredame et al. (2000): T-Coffee: A novel method for multiple sequence alignments. J. Mol. Biol. 302, 205-217) oder Programme, die auf diesen Programmen beziehungsweise Algorithmen basieren. In der vorliegenden Patentanmeldung wurden alle Sequenzvergleiche (Alignments) mit dem Computer-Programm Vector NTI^{®} Suite 10.3 (Invitrogen Corporation, 1600 Faraday Avenue, Carlsbad, Kalifornien, USA) mit den vorgegebenen Standardparametern erstellt, dessen AlignX-Modul für die Sequenzvergleiche auf ClustalW basiert.

Solch ein Vergleich erlaubt auch eine Aussage über die Ähnlichkeit der verglichenen Sequenzen zueinander. Sie wird üblicherweise in Prozent Identität, das heißt dem Anteil der identischen Nukleotide oder Aminosäurereste an denselben oder in einem Alignment einander entsprechenden Positionen angegeben. Der weiter gefasste Begriff der Homologie bezieht bei Aminosäuresequenzen konservierte Aminosäure-Austausche in die Betrachtung mit ein, also Aminosäuren mit ähnlicher chemischer Aktivität, da diese innerhalb des Proteins meist ähnliche chemische Aktivitäten ausüben. Daher kann die Ähnlichkeit der verglichenen Sequenzen auch Prozent Homologie oder Prozent Ähnlichkeit angegeben sein. Identitäts- und/oder Homologieangaben können über ganze Polypeptide oder Gene oder nur über einzelne Bereiche getroffen werden. Homologe oder identische Bereiche von verschiedenen Nukleinsäure- oder Aminosäuresequenzen sind daher durch Übereinstimmungen in den Sequenzen definiert. Solche Bereiche weisen oftmals identische Funktionen auf. Sie können klein sein und nur wenige Nukleotide oder Aminosäuren umfassen. Oftmals üben solche kleinen Bereiche für die Gesamtaktivität des Proteins essentielle Funktionen aus. Es kann daher sinnvoll sein, Sequenzübereinstimmungen nur auf einzelne, gegebenenfalls kleine Bereiche zu beziehen. Soweit nicht anders angegeben beziehen sich Identitäts- oder Homologieangaben in der vorliegenden Anmeldung aber auf die Gesamtlänge der jeweils angegebenen Nukleinsäure- oder Aminosäuresäuresequenz.

In einer ganz besonders bevorzugten Ausführungsform der Erfindung ist die Protease dadurch gekennzeichnet, dass ihre Reinigungsleistung mindestens derjenigen einer Protease entspricht, die eine Aminosäuresequenz umfasst, die der in SEQ ID NO. 2 angegebenen Aminosäuresequenz entspricht, wobei die Reinigungsleistung in einem Waschsystem bestimmt wird, das ein Waschmittel in einer Dosierung zwischen 4,5 und 7,0 Gramm pro Liter Waschflotte sowie die Protease enthält, wobei die zu vergleichenden Proteasen konzentrationsgleich (bezogen auf aktives Protein) eingesetzt sind und die Reinigungsleistung gegenüber einer Blut-Anschmutzung auf Baumwolle, insbesondere gegenüber der Anschmutzung Blut auf Baumwolle: Produkt Nr. 111 erhältlich von der Firma Eidgenössische Material- und Prüfanstalt (EMPA) Testmaterialien AG, St. Gallen, Schweiz, bestimmt wird durch Messung des Weißheitsgrades der gewaschenen Textilien, der Waschvorgang für 70 Minuten bei einer Temperatur von 40°C erfolgt und das Wasser eine Wasserhärte zwischen 15,5 und 16,5° (deutsche Härte) aufweist. Die Konzentration der Protease in dem für dieses Waschsystem bestimmten Waschmittel beträgt von 0,001-0,1 Gew.-%, vorzugsweise von 0,01 bis 0,06 Gew.-%, bezogen auf aktives Protein.

Zusätzlich zu den vorstehend erläuterten Aminosäureveränderungen können erfindungsgemäße Amylasen und Proteasen weitere Aminosäureveränderungen, insbesondere Aminosäure-Substitutionen, -Insertionen oder -Deletionen, aufweisen. Solche Amylasen und Proteasen sind beispielsweise durch gezielte genetische Veränderung, d.h. durch Mutageneseverfahren, weiterentwickelt und für bestimmte Einsatzzwecke oder hinsichtlich spezieller Eigenschaften (beispielsweise hinsichtlich ihrer katalytischen Aktivität, Stabilität, usw.) optimiert. Ferner können erfindungsgemäße Nukleinsäuren in Rekombinationsansätze eingebracht und damit zur Erzeugung völlig neuartiger Amylasen und Proteasen oder anderer Polypeptide genutzt werden.

Das Ziel ist es, in die bekannten Moleküle gezielte Mutationen wie Substitutionen, Insertionen oder Deletionen einzuführen, um beispielsweise die Reinigungsleistung von erfindungsgemäßen Enzymen zu verbessern. Hierzu können insbesondere die Oberflächenladungen und/oder der isoelektrische Punkt der Moleküle und dadurch ihre Wechselwirkungen mit dem Substrat verändert werden. So kann beispielsweise die Nettoladung der Enzyme verändert werden, um darüber die Substratbindung insbesondere für den Einsatz in Wasch- und Reinigungsmitteln zu beeinflussen. Alternativ oder ergänzend kann durch eine oder mehrere entsprechende Mutationen die Stabilität der Amylase oder Protease erhöht und dadurch ihre Reinigungsleistung verbessert werden. Vorteilhafte Eigenschaften einzelner Mutationen, z.B. einzelner Substitutionen, können sich ergänzen. Eine hinsichtlich bestimmter Eigenschaften bereits optimierte Amylase oder Protease, zum Beispiel hinsichtlich ihrer Stabilität gegenüber Tensiden und/oder Bleichmitteln und/oder anderen Komponenten, kann daher im Rahmen der Erfindung zusätzlich weiterentwickelt sein.

Für die Beschreibung von Substitutionen, die genau eine Aminosäureposition betreffen (Aminosäureaustausche), wird folgende Konvention angewendet: zunächst wird die natürlicherweise vorhandene Aminosäure in Form des international gebräuchlichen Einbuchstaben-Codes bezeichnet, dann folgt die zugehörige Sequenzposition und schließlich die eingefügte Aminosäure. Mehrere Austausche innerhalb derselben Polypeptidkette werden durch Schrägstriche voneinander getrennt. Bei Insertionen sind nach der Sequenzposition zusätzliche Aminosäuren benannt. Bei Deletionen ist die fehlende Aminosäure durch ein Symbol, beispielsweise einen Stern oder einen Strich, ersetzt. Beispielsweise beschreibt A95G die Substitution von Alanin an Position 95 durch Glycin, A95AG die Insertion von Glycin nach der Aminosäure Alanin an Position 95 und A95* die Deletion von Alanin an Position 95. Diese Nomenklatur ist dem Fachmann auf dem Gebiet der Enzymtechnologie bekannt.

Ein weiterer Gegenstand der vorliegenden Erfindung ist daher ein Wasch und-Reinigungsmittel enthaltend eine Kombination aus einer α-Amylase und einer Protease, wobei die α-Amylase bzw. Protease dadurch gekennzeichnet ist, dass sie aus einer erfindungsgemäßen Amylase bzw. Protease als Ausgangsmolekül durch ein- oder mehrfache konservative Aminosäuresubstitution erhältlich ist. Der Begriff "konservative Aminosäuresubstitution" bedeutet den Austausch (Substitution) eines Aminosäurerestes gegen einen anderen Aminosäurerest, wobei dieser Austausch nicht zu einer Änderung der Polarität oder Ladung an der Position der ausgetauschten Aminosäure führt, z. B. der Austausch eines unpolaren Aminosäurerestes gegen einen anderen unpolaren Aminosäurerest. Konservative Aminosäuresubstitutionen im Rahmen der Erfindung umfassen beispielsweise: G=A=S, I=V=L=M, D=E, N=Q, K=R, Y=F, S=T, G=A=I=V=L=M=Y=F=W=P=S=T.

Ein weiterer Gegenstand der vorliegenden Erfindung ist daher ein Wasch und-Reinigungsmittel enthaltend eine Kombination aus einer α-Amylase und einer Protease, wobei die α-Amylase dadurch gekennzeichnet ist, dass sie aus einer erfindungsgemäßen Amylase als Ausgangsmolekül erhältlich ist durch Fragmentierung, Deletions-, Insertions- oder Substitutionsmutagenese und eine Aminosäuresequenz umfasst, die über eine Länge von mindestens 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 475, 476, 477, 478, 479, 480 oder 481 zusammenhängenden Aminosäuren mit dem Ausgangsmolekül übereinstimmt. Analog kann auch die Protease dadurch gekennzeichnet sein, dass sie aus einer erfindungsgemäßen Protease als Ausgangsmolekül erhältlich ist durch Fragmentierung, Deletions-, Insertions- oder Substitutionsmutagenese und eine Aminosäuresequenz umfasst, die über eine Länge von mindestens 50, 60, 70, 80, 90, 100, 110, 120, 130, 140, 150, 160, 170, 180, 190, 200, 210, 220, 230, 240, 250, 260, 262, 264, 265, 266, 267 oder 268 zusammenhängenden Aminosäuren mit dem Ausgangsmolekül übereinstimmt.

So ist es beispielsweise möglich, an den Termini oder in den Loops des Enzyms einzelne Aminosäuren zu deletieren, ohne daß dadurch die enzymatische Aktivität verloren oder vermindert wird. Ferner kann durch derartige Fragmentierung, Deletions-, Insertions- oder Substitutionsmutagenese beispielsweise auch die Allergenizität betreffender Enzyme gesenkt und somit insgesamt ihre Einsetzbarkeit verbessert werden. Vorteilhafterweise behalten die Enzyme auch nach der Mutagenese ihre enzymatische Aktivität, d.h. ihre enzymatische Aktivität entspricht mindestens derjenigen des Ausgangsenzyms. Auch Substitutionen können vorteilhafte Wirkungen zeigen. Sowohl einzelne wie auch mehrere zusammenhängende Aminosäuren können gegen andere Aminosäuren ausgetauscht werden.

Ein erfindungsgemäßes Enzym kann zusätzlich stabilisiert sein, insbesondere durch eine oder mehrere Mutationen, beispielsweise Substitutionen, oder durch Kopplung an ein Polymer. Denn eine Erhöhung der Stabilität bei der Lagerung und/oder während des Einsatzes, beispielsweise beim Waschprozess, führt dazu, dass die enzymatische Aktivität länger anhält und damit die Reinigungsleistung verbessert wird. Grundsätzlich kommen alle im Stand der Technik beschriebenen und/oder zweckmäßigen Stabilisierungsmöglichkeiten in Betracht. Bevorzugt sind solche Stabilisierungen, die über Mutationen des Enzyms selbst erreicht werden, da solche Stabilisierungen im Anschluss an die Gewinnung des Enzyms keine weiteren Arbeitsschritte erfordern. Hierfür geeignete Sequenzveränderungen sind aus dem Stand der Technik bekannt.

Weitere Möglichkeiten der Stabilisierung sind z. B.:
- Veränderung der Bindung von Metallionen, insbesondere der Calcium-Bindungsstellen, beispielsweise durch Austauschen von einer oder mehreren der an der Calcium-Bindung beteiligten Aminosäure(n) gegen eine oder mehrere negativ geladene Aminosäuren und/oder durch Einführen von Sequenzveränderungen in mindestens einer der Folgen der beiden Aminosäuren Arginin/Glycin;
- Schutz gegen den Einfluss von denaturierenden Agentien wie Tensiden durch Mutationen, die eine Veränderung der Aminosäuresequenz auf oder an der Oberfläche des Proteins bewirken;
- Austausch von Aminosäuren, die nahe dem N-Terminus liegen, gegen solche, die vermutlich über nicht-kovalente Wechselwirkungen mit dem Rest des Moleküls in Kontakt treten und somit einen Beitrag zur Aufrechterhaltung der globulären Struktur leisten.

Bevorzugte Ausführungsformen sind solche, bei denen das Enzym auf mehrere Arten stabilisiert wird, da mehrere stabilisierende Mutationen additiv oder synergistisch wirken.

Ein weiterer Gegenstand der Erfindung ist ein Enzym wie vorstehend beschrieben, welches dadurch gekennzeichnet ist, dass es mindestens eine chemische Modifikation aufweist. Ein Enzym mit einer solchen Veränderung wird als Derivat bezeichnet, d.h. das Enzym ist derivatisiert.

Unter Derivaten werden im Sinne der vorliegenden Anmeldung demnach solche Proteine verstanden, deren reine Aminosäurekette chemisch modifiziert worden ist. Solche Derivatisierungen können beispielsweise in vivo durch die Wirtszelle erfolgen, die das Protein exprimiert. Diesbezüglich sind Kopplungen niedrigmolekularer Verbindungen wie von Lipiden oder Oligosacchariden besonders hervorzuheben. Derivatisierungen können aber auch in vitro durchgeführt werden, etwa durch die chemische Umwandlung einer Seitenkette einer Aminosäure oder durch kovalente Bindung einer anderen Verbindung an das Protein. Beispielsweise ist die Kopplung von Aminen an Carboxylgruppen eines Enzyms zur Veränderung des isoelektrischen Punkts möglich. Eine solche andere Verbindung kann auch ein weiteres Protein sein, das beispielsweise über bifunktionelle chemische Verbindungen an ein erfindungsgemäßes Protein gebunden wird. Ebenso ist unter Derivatisierung die kovalente Bindung an einen makromolekularen Träger zu verstehen, oder auch ein nichtkovalenter Einschluss in geeignete makromolekulare Käfigstrukturen. Derivatisierungen können beispielsweise die Substratspezifität oder die Bindungsstärke an das Substrat beeinflussen oder eine vorübergehende Blockierung der enzymatischen Aktivität herbeiführen, wenn es sich bei der angekoppelten Substanz um einen Inhibitor handelt. Dies kann beispielsweise für den Zeitraum der Lagerung sinnvoll sein. Derartige Modifikationen können ferner die Stabilität oder die enzymatische Aktivität beeinflussen. Sie können ferner auch dazu dienen, die Allergenizität und/oder Immunogenizität des Proteins herabzusetzen und damit beispielsweise dessen Hautverträglichkeit zu erhöhen. Beispielsweise können Kopplungen mit makromolekularen Verbindungen, beispielsweise Polyethylenglykol, das Protein hinsichtlich der Stabilität und/oder Hautverträglichkeit verbessern.

Unter Derivaten eines erfindungsgemäßen Proteins können im weitesten Sinne auch Präparationen dieser Proteine verstanden werden. Je nach Gewinnung, Aufarbeitung oder Präparation kann ein Protein mit diversen anderen Stoffen vergesellschaftet sein, beispielsweise aus der Kultur der produzierenden Mikroorganismen. Ein Protein kann auch, beispielsweise zur Erhöhung seiner Lagerstabilität, mit anderen Stoffen gezielt versetzt worden sein. Erfindungsgemäß sind deshalb auch alle Präparationen eines erfindungsgemäßen Proteins. Das ist auch unabhängig davon, ob es in einer bestimmten Präparation tatsächlich diese enzymatische Aktivität entfaltet oder nicht. Denn es kann gewünscht sein, dass es bei der Lagerung keine oder nur geringe Aktivität besitzt, und erst zum Zeitpunkt der Verwendung seine enzymatische Funktion entfaltet. Dies kann beispielsweise über entsprechende Begleitstoffe gesteuert werden.

Im Allgemeinen können die in einer erfindungsgemäßen Zusammensetzung enthaltenen Enzyme an Trägerstoffe adsorbiert und/oder in Hüllsubstanzen eingebettet sein, um sie gegen vorzeitige Inaktivierung zu schützen.

Erfindungsgemäße Zusammensetzungen können die erhaltenen Enzyme in jeder nach dem Stand der Technik etablierten Form zugesetzt werden. Hierzu gehören insbesondere die durch Granulation, Extrusion oder Lyophilisierung erhaltenen festen Präparationen, vorteilhafterweise möglichst konzentriert, wasserarm und/oder mit Stabilisatoren versetzt. In einer alternativen Darreichungsform können die Enzyme auch verkapselt werden, beispielsweise durch Sprühtrocknung oder Extrusion der Enzymlösung zusammen mit einem, vorzugsweise natürlichen Polymer oder in Form von Kapseln, beispielsweise solchen, bei denen die Enzyme wie in einem erstarrten Gel eingeschlossen sind, oder in solchen vom Kern-Schale-Typ, bei dem ein enzymhaltiger Kern mit einer Wasser-, Luft- und/oder Chemikalien-undurchlässigen Schutzschicht überzogen ist. In aufgelagerten Schichten können zusätzlich weitere Wirkstoffe, beispielsweise Stabilisatoren, Emulgatoren, Pigmente, Bleich- oder Farbstoffe aufgebracht werden. Derartige Kapseln werden nach an sich bekannten Methoden, beispielsweise durch Schüttel- oder Rollgranulation oder in Fluid-bed-Prozessen aufgebracht. Vorteilhafterweise sind derartige Granulate, beispielsweise durch Aufbringen polymerer Filmbildner, staubarm und aufgrund der Beschichtung lagerstabil.

Die flüssigen Tensidzusammensetzungen enthalten bevorzugt zusätzlich mindestens eine Cellulase. Eine Cellulase ist ein Enzym. Für Cellulasen können synonyme Begriffe verwendet werden, insbesondere Endoglucanase, Endo-1,4-beta-Glucanase, Carboxymethylcellulase, Endo-1,4-beta-D-Glucanase, beta-1,4-Glucanase, beta-1,4-Endoglucanhydrolase, Celludextrinase oder Avicelase. Entscheidend dafür, ob ein Enzym eine Cellulase im Sinne der Erfindung ist, ist deren Fähigkeit zur Hydrolyse von 1,4-ß-D-glucosidischen Bindungen in Cellulose.

Erfindungsgemäß konfektionierbare Cellulasen (Endoglucanasen, EG) umfassen beispielsweise die pilzliche, Endoglucanase(EG)-reiche Cellulase-Präparation beziehungsweise deren Weiterentwicklungen, die von dem Unternehmen Novozymes unter dem Handelsnamen Celluzyme^{®} angeboten wird. Die ebenfalls von dem Unternehmen Novozymes erhältlichen Produkte Endolase^{®} und Carezyme^{®} basieren auf der 50 kD-EG, beziehungsweise der 43 kD-EG aus Humicola insolens DSM 1800. Weitere einsetzbare Handelsprodukte dieses Unternehmens sind Cellusoft^{®}, Renozyme^{®} und Celluclean^{®}. Weiterhin einsetzbar sind beispielsweise Cellulasen, die von dem Unternehmen AB Enzymes, Finnland, unter den Handelsnamen Ecostone^{®} und Biotouch^{®} erhältlich sind, und die zumindest zum Teil auf der 20 kD-EG aus Melanocarpus basieren. Weitere Cellulasen von dem Unternehmen AB Enzymes sind Econase^{®} und Ecopulp^{®}. Weitere geeignete Cellulasen sind aus Bacillus sp. CBS 670.93 und CBS 669.93, wobei die aus Bacillus sp. CBS 670.93 von dem Unternehmen Danisco/Genencor unter dem Handelsnamen Puradax^{®} erhältlich ist. Weitere verwendbare Handelsprodukte des Unternehmens Danisco/Genencor sind "Genencor detergent cellulase L" und IndiAge^{®}Neutra.

Auch durch Punktmutationen erhältliche Varianten dieser Enzyme können erfindungsgemäß eingesetzt werden. Besonders bevorzugte Cellulasen sind Thielavia terrestris Cellulasevarianten, die in der internationalen Offenlegungsschrift WO 98/12307 offenbart sind, Cellulasen aus Melanocarpus, insbesondere Melanocarpus albomyces, die in der internationalen Offenlegungsschrift WO 97/14804 offenbart sind, Cellulasen vom EGIII-Typ aus Trichoderma reesei, die in der europäischen Patentanmeldung EP 1 305 432 offenbart sind bzw. hieraus erhältliche Varianten, insbesondere diejenigen, die offenbart sind in den europäischen Patentanmeldungen EP 1240525 und EP 1305432, sowie Cellulasen, die offenbart sind in den internationalen Offenlegungsschriften WO 1992006165, WO 96/29397 und WO 02/099091. Auf deren jeweilige Offenbarung wird daher ausdrücklich verwiesen bzw. deren diesbezüglicher Offenbarungsgehalt wird daher ausdrücklich in die vorliegende Patentanmeldung mit einbezogen.

Erfindungsgemäß besonders bevorzugte Zusammensetzungen sind dadurch gekennzeichnet, dass als zusätzliche Cellulase mindestens eine Cellulase aus *Melanocarpus sp.* oder *Myriococcum sp.* erhältlicher 20K-Cellulase oder solcher, die eine Homologie von über 80% (zunehmend bevorzugt von über 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 99,0%, 99,1%, 99,2%, 99,3%, 99,4%, 99,5%, 99,6%, 99,7%, 99,8%, 99,9%) dazu aufweist.

Die aus Melanocarpus sp. oder Myriococcum sp. erhältliche 20K-Cellulase ist aus der internationalen Patentanmeldung WO 97/14804 bekannt. Sie besitzt wie dort beschrieben ein Molekulargewicht von etwa 20 kDa und weist bei 50 °C im pH-Bereich von 4 bis 9 mindestens 80% ihrer maximalen Aktivität auf, wobei noch fast 50% der maximalen Aktivität bei pH 10 erhalten bleiben. Sie kann, wie ebenfalls dort beschrieben, aus Melanocarpus albomyces isoliert und in gentechnisch hergestellten Trichoderma reseei-Transformanten produziert werden. Im Sinne der vorliegenden Erfindung brauchbar sind auch Cellulasen, die eine Homologie von über 80% (zunehmend bevorzugt von über 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 99,0%, 99,1%, 99,2%, 99,3%, 99,4%, 99,5%, 99,6%, 99,7%, 99,8%, 99,9%) zur 20K-Cellulase aufweisen.

K20-Cellulase wird vorzugsweise in solchen Mengen verwendet, dass eine erfindungsgemäße Zusammensetzung eine cellulolytische Aktivität von 1 NCU/g bis 500 NCU/g (bestimmbar durch die Hydrolyse von 1-gewichtsprozentiger Carboxymethylcellulose bei 50 °C und neutralem pH und Bestimmung der dabei freigesetzten reduzierenden Zucker mittels Dinitrosalicylsäure, wie von M.J.Bailey et al. in Enzyme Microb. Technol. 3: 153 (1981) beschrieben; 1 NCU definiert die Enzymmenge, die reduzierenden Zucker in einer Menge erzeugt, die 1 nmol Glukose pro Sekunde entspricht), insbesondere von 2 NCU/g bis 400 NCU/g und besonders bevorzugt von 6 NCU/g bis 200 NCU/g aufweist. Daneben kann die erfindungsgemäße Zusammensetzung gegebenenfalls noch weitere Cellulasen enthalten.

Eine erfindungsgemäße Zusammensetzung enthält vorzugsweise 0,001 mg bis 0,5 mg, insbesondere 0,02 mg bis 0,3 mg an cellulolytischem Protein pro Gramm der gesamten Zusammensetzung. Die Proteinkonzentration kann mit Hilfe bekannter Methoden, zum Beispiel dem Bicinchonsäure-Verfahren (BCA-Verfahren, Pierce Chemical Co., Rockford, IL) oder dem Biuret-Verfahren (A.G. Gornall, C.S. Bardawill und M.M. David, J. Biol. Chem. 177, 751-766, 1948) bestimmt werden.

Es ist erfindungsgemäß wiederum besonders bevorzugt, zusätzlich zu mindestens einer ersten Cellulase aus *Melanocarpus sp.* oder *Myriococcum sp.* erhältlicher 20K-Cellulase oder solcher, die eine Homologie von über 80% (zunehmend bevorzugt von über 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 99,0%, 99,1%, 99,2%, 99,3%, 99,4%, 99,5%, 99,6%, 99,7%, 99,8%, 99,9%) dazu aufweist mindestens eine weitere von der ersten Cellulase verschiedene zweite Cellulase einzusetzen.

Es ist erfindungsgemäß bevorzugt, wenn die erfindungsgemäßen flüssigen Tensidzusammensetzungen zusätzlich mindestens eine Lipase enthalten. Erfindungsgemäß bevorzugte Lipase-Enzyme werden ausgewählt aus mindestens einem Enzym der Gruppe, die gebildet wird aus Triacylglycerol-Lipase (E.C. 3.1.1.3) und Lipoprotein-Lipase (E.C. 3.1.1.34) und Monoglycerid-Lipase (E.C. 3.1.1.23).

Das erfindungsgemäß bevorzugte Einsatzgebiet der erfindungsgemäßen Zusammensetzungen ist die Reinigung von Textilien. Weil Wasch- und Reinigungsmittel für Textilien überwiegend alkalische pH-Werte aufweisen, werden hierfür insbesondere Lipasen eingesetzt, die im alkalischen Medium aktiv sind.

Ferner ist die in einer erfindungsgemäßen Zusammensetzung bevorzugt enthaltene Lipase natürlicherweise in einem Mikroorganismus der Art *Thermomyces lanuginosus* oder *Rhizopus oryzae* oder *Mucorjavanicus* vorhanden oder von vorgenannten natürlicherweise vorhandenen Lipasen per Mutagenese abgeleitet. Besonders bevorzugt enthalten die erfindungsgemäßen Zusammensetzungen mindestens eine Lipase, die natürlicherweise in einem Mikroorganismus der Art *Thermomyces lanuginosus* vorhanden oder sich von vorgenannten natürlicherweise in *Thermomyces lanuginosus* vorhandenen Lipasen per Mutagenese ableitet.

Natürlicherweise vorhanden bedeutet in diesem Zusammenhang, dass die Lipase ein eigenes Enzym des Mikroorganismus ist. Die Lipase kann folglich in dem Mikroorganismus von einer Nukleinsäuresequenz exprimiert werden, die Teil der chromosomalen DNA des Mikroorganismus in seiner Wildtyp-Form ist. Sie bzw. die für sie codierende Nukleinsäuresequenz ist folglich in der Wildtyp-Form des Mikroorganismus vorhanden und/oder kann aus der Wildtyp-Form des Mikroorganismus aus diesem isoliert werden. Im Gegensatz hierzu wäre eine nicht natürlicherweise in dem Mikroorganismus vorhandene Lipase bzw. die für sie codierende Nukleinsäuresequenz mit Hilfe gentechnischer Verfahren in den Mikroorganismus gezielt eingebracht worden, so dass der Mikroorganismus um die Lipase bzw. die für sie codierende Nukleinsäuresequenz bereichert worden wäre. Jedoch kann eine Lipase, die natürlicherweise in einem Mikroorganismus der Art *Thermomyces lanuginosus* oder *Rhizopus oryzae* oder *Mucor javanicus* vorhanden ist, aber durchaus rekombinant von einem anderen Organismus hergestellt worden sein.

Der Pilz *Thermomyces lanuginosus* (auch bekannt unter *Humicola lanuginosa*) zählt zur Klasse der Eurotiomycetes (Unterklasse Eurotiomycetidae), hierin zur Ordnung der Eurotiales und hierin zur Familie Trichocomaceae und der Gattung Thermomyces. Der Pilz *Rhizopus oryzae* zählt zur Klasse der Zygomyceten (Unterklasse Incertae sedis), hierin zur Ordnung Mucorales und hierin wiederum zur Familie Mucoraceae und der Gattung Rhizopus. Der Pilz *Mucor javanicus* zählt ebenfalls zur Klasse der Zygomyceten (Unterklasse Incertae sedis), hierin zur Ordnung Mucorales und hierin wiederum zur Familie Mucoraceae, hierin dann zur Gattung Mucor. Die Bezeichnungen *Thermomyces lanuginosus,* Rhizopus oryzae und Mucor javanicus sind die biologischen Artbezeichnungen innerhalb der jeweiligen Gattung.

Erfindungsgemäß bevorzugte Lipasen sind die von dem Unternehmen Amano Pharmaceuticals unter den Bezeichnungen Lipase M-AP10^{®}, Lipase LE^{®} und Lipase F^{®} (auch Lipase JV^{®}) erhältlichen Lipaseenzyme. Die Lipase F^{®} ist beispielsweise natürlicherweise in Rhizopus oryzae vorhanden. Die Lipase M-AP10^{®} ist beispielsweise natürlicherweise in Mucor javanicus vorhanden.

Zusammensetzungen einer ganz besonders bevorzugten Ausführungsform der Erfindung enthalten mindestens eine Lipase, die ausgewählt wird aus mindestens einem oder mehreren Polypeptiden mit einer Aminosäuresequenz, die zu mindestens 90% (und zunehmend bevorzugt zu mindestens 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 99,0%, 99,1%, 99,2%, 99,3%, 99,4%, 99,5%, 99,6%, 99,7%, 99,8%, 99,9%) zur Wildtyp Lipase aus dem Stamm DSM 4109 *Thermomyces lanuginosus* identisch ist. Dabei ist es erneut bevorzugt, wenn ausgehend von besagter Wildtyp Lipase aus dem Stamm DSM 4109 zumindest die Aminosäureänderung N233R vorliegt.

Es sind im Rahmen einer weiteren Ausführungsform insbesondere solche Lipasen abgeleitet von der Wildtyp Lipase aus dem Stamm DSM 4109 erfindungsgemäß bevorzugt verwendbar, die ausgewählt werden aus mindestens einem Lipase-Enzym gemäß mindestens einem der Ansprüche 1 bis 13 der Druckschrift WO 00/60063 A1. Auf die Offenbarung Druckschrift WO 00/60063 A1 wird ausdrücklich vollumfänglich Bezug genommen.

Besonders bevorzugt wird in den Zusammensetzungen der Erfindung mindestens eine Lipase eingesetzt, die abgeleitet ist von der Wildtyp Lipase aus dem Stamm DSM 4109 und in der ausgehend von besagter Wildtyp Lipase mindestens eine Substitution einer elektrisch neutralen oder negativ geladenen Aminosäure durch eine positiv geladene Aminosäure erfolgte. Die Ladung wird in Wasser bei pH 10 bestimmt. Negative Aminosäuren im Sinne der Erfindung sind E, D, Y und C. Positiv geladene Aminosäuren im Sinne der Erfindung sind R, K und H, insbesondere Rund K. Neutrale Aminosäure im Sinne der Erfindung sind G, A, V, L, I, P, F, W, S, T, M, N, Q und C, wenn C eine Disulfidbrücke ausbildet.

Im Rahmen dieser Ausführungsform der Erfindung ist es erneut bevorzugt, wenn ausgehend von der Wildtyp Lipase aus dem Stamm DSM 4109 mindestens einen der folgenden Aminosäureaustausche in den Positionen D96L, T213R und/oder N233R, besonders bevorzugt T213R und N233R, vorliegt.

Eine höchst bevorzugte Lipase ist kommerziell unter dem Handelsnamen Lipex^{®} von dem Unternehmen Novozymes (Dänemark) zu beziehen und vorteilhaft in den erfindungsgemäßen Reinigungszusammensetzungen einsetzbar. Besonders bevorzugt ist hierbei die Lipase Lipex^{®} 100 L (ex Novozymes A/S, Dänemark). Bevorzugte Zusammensetzungen sind dadurch gekennzeichnet, dass bezogen auf das Gesamtgewicht der Zusammensetzung besagtes Lipase-Enzym aus Lipex^{®} 100 L in einer Gesamtmenge von 0,01 bis 1,0 Gew.-%, insbesondere von 0,02 bis 0,3 Gew.-%, enthalten ist.

Die erfindungsgemäßen Zusammensetzungen können als Enzym zusätzlich mindestens eine Mannanase enthalten. Eine in der erfindungsgemäßen Zusammensetzung (insbesondere in einem erfindungsgemäß bevorzugten Wasch- und Reinigungsmittel für Textilien) enthaltene Mannanase katalysiert im Rahmen ihrer Mannanase-Aktivität die Hydrolyse von 1,4-beta-D-mannosidischen Bindungen in Mannanen, Galactomannanen, Glucomannanen und Galactoglucomannanen. Besagte erfindungsgemäße Mannanase-Enzyme werden gemäß Enzym Nomenklatur als E.C. 3.2.1.78 klassifiziert.

Die Mannanase-Aktivität eines Polypeptids bzw. Enzyms kann gemäß literaturbekannten Testmethoden bestimmt werden. Dabei wird beispielsweise eine Testlösung in Löcher mit 4 mm Durchmesser einer Agarplatte, enthaltend 0.2 Gew.-% AZGL Galactomannan (carob), i.e. Substrat für das endo-1,4-beta-D-Mannanase Essay, erhältlich unter Katalognummer I-AZGMA der Firma Megazyme (http://www.megazyme.com), eingebracht.

Geeignete erfindungsgemäße Zusammensetzungen enthalten beispielsweise die Mannanase, die unter dem Namen Mannaway^{®} von der Firma Novozymes vermarktet wird.

Mannanase-Enzyme wurden in zahlreichen *Bacillus* Organismen identifiziert:
WO 99/64619 offenbart Beispiele für flüssige, proteasehaltige Waschmittelzusammensetzungen mit hohem Gesamttensidgehalt von mindestens 20 Gew.-%, die zusätzlich Mannanase-Enzym umfassen.

Bevorzugterweise enthalten die erfindungsgemäßen Zusammensetzungen bezogen auf das Gesamtgewicht der Zusammensetzung Mannanase in einer Gesamtmenge von 0,01 bis 1,0 Gew.-%, insbesondere von 0,02 bis 0,3 Gew.-%.

Mannanase-Polypeptide aus Stämmen der *Thermoanaerobacter Gruppe,* wie Caldicellulosiruptor, sind erfindungsgemäß bevorzugt geeignet. Gleichfalls im Rahmen der Erfindung einsetzbar sind Mannanase-Polypeptide der Pilze *Humicola* oder *Scytalidium,* insbesondere der Species *Humicola insolens* oder *Scytalidium thermophilum.*

Es ist erfindungsgemäß besonders bevorzugt, wenn die erfindungsgemäßen Zusammensetzungen als Mannanase-Enzym mindestens ein Mannanase-Polypeptid aus gram-positiven alkalophilen Stämmen von *Bacillus,* insbesondere ausgewählt aus mindestens einem Vertreter der Gruppe aus *Bacillus subtilis, Bacillus lentus, Bacillus clausii, Bacillus agaradhaerens, Bacillus brevis, Bacillus stearothermophilus, Bacillus alkalophilus, Bacillus amyloliquefaciens, Bacillus coagulans, Bacillus circulans, Bacillus lautus, Bacillus thuringiensis, Bacillus cheniformis, and Bacillus sp., besonders bevorzugt ausgewählt aus mindestens einem Vertreter der Gruppe aus Bacillus sp. 1633, Bacillus sp. AAI12, Bacillus clausii, Bacillus agaradhaerens and Bacillus licheniformis.*

Dabei ist es wiederum bevorzugt, wenn besagte bevorzugte Mannanase in einer Gesamtmenge von 0,01 bis 1,0 Gew.-%, insbesondere von 0,02 bis 0,3 Gew.-%, jeweils bezogen auf das Gesamtgewicht der Zusammensetzung, in der erfindungsgemäßen Zusammensetzung enthalten ist.

In verschiedenen Ausführungsformen enthält die erfindungsgemäße flüssige Tensidzusammensetzung neben der Amylase, die eine Aminosäuresequenz umfasst, die mindestens 70 % Sequenzidentität mit der in SEQ ID NO:1 angegebenen Aminosäuresequenz über deren Gesamtlänge aufweist, zusätzlich mindestens eine weitere α-Amylase.

Beispiele für zusätzliche Amylasen sind die α-Amylasen aus Bacillus licheniformis, aus B. amyloliquefaciens und aus B. stearothermophilus sowie deren für den Einsatz in Wasch- oder Reinigungsmitteln verbesserte Weiterentwicklungen.

Erfindungsgemäß bevorzugte Zusammensetzungen enthalten α-Amylase in einer Gesamtmenge von 0,01 bis 2,0 Gew.-%, insbesondere von 0,02 bis 0,6 Gew.-%.

Es ist erfindungsgemäß bevorzugt, wenn die flüssige Tensidzusammensetzung zusätzlich mindestens ein polyalkoxyliertes Polyamin enthält.

Bei dem polyalkoxylierten Polyamin im Rahmen der vorliegenden Erfindung und deren einzelner Aspekte handelt es sich um ein Polymer mit einem N-Atom-haltigen Rückgrat, das an den N-Atomen Polyalkoxygruppen trägt. Das Polyamin weist an den Enden (Terminus und/oder Seitenketten) primäre Aminofunktionen und im Inneren vorzugsweise sowohl sekundäre als auch tertiäre Aminofunktionen auf; gegebenenfalls kann es im Inneren auch lediglich sekundäre Aminofunktionen aufweisen, so dass sich nicht ein verzweigtkettiges, sondern ein lineares Polyamin ergibt. Das Verhältnis von primären zu sekundären Aminogruppen im Polyamin liegt vorzugsweise im Bereich von 1:0,5 bis 1:1,5, insbesondere im Bereich von 1:0,7 bis 1:1. Das Verhältnis von primären zu tertiären Aminogruppen im Polyamin liegt vorzugsweise im Bereich von 1:0,2 bis 1:1, insbesondere im Bereich von 1:0,5 bis 1:0,8. Vorzugsweise weist das Polyamin eine mittlere Molmasse im Bereich von 500 g/mol bis 50000 g/mol, insbesondere von 550 g/mol bis 5000 g/mol auf. Die N-Atome im Polyamin sind durch Alkylengruppen, vorzugsweise durch Alkylengruppen mit 2 bis 12 C-Atomen, insbesondere 2 bis 6 C-Atomen, voneinander getrennt, wobei nicht sämtliche Alkylengruppen die gleiche C-Atomzahl aufweisen müssen. Besonders bevorzugt sind Ethylengruppen, 1,2-Propylengruppen, 1,3-Propylengruppen, und deren Mischungen. Polyamine, die Ethylengruppen als besagte Alkylengruppe tragen, werden auch als Polyethylenimin oder PEI bezeichnet. PEI ist ein erfindungsgemäß besonders bevorzugtes Polymer mit N-Atom-haltigem Rückgrat.

Die primären Aminofunktionen im Polyamin können 1 oder 2 Polyalkoxygruppen und die sekundären Aminofunktionen 1 Polyalkoxygruppe tragen, wobei nicht jede Aminofunktion Alkoxygruppen-substituiert sein muss. Die durchschnittliche Anzahl von Alkoxygruppen pro primärer und sekundärer Aminofunktion im polyalkoxylierten Polyamin beträgt vorzugsweise 1 bis 100, insbesondere 5 bis 50. Bei den Alkoxygruppen im polyalkoxylierten Polyamin handelt es sich vorzugsweise um Polypropoxygruppen, die direkt an N-Atome gebunden sind, und/oder um Polyethoxygruppen, die an ggf. vorhandene Propoxyreste und an N-Atome gebunden sind, welche keine Propoxygruppen tragen.

Polyethoxylierte Polyamine werden durch Umsetzung von Polyaminen mit Ethylenoxid (kurz: EO) erhalten. Die polyalkoxylierten Polyamine, die Ethoxy- und Propoxy-Gruppen enthalten, sind bevorzugt durch Umsetzung von Polyaminen mit Propylenoxid (kurz: PO) und nachfolgender Umsetzung mit Ethylenoxid zugänglich.

Die durchschnittliche Anzahl von Propoxygruppen pro primärer und sekundärer Aminofunktion im polyalkoxylierten Polyamin beträgt vorzugsweise 1 bis 40, insbesondere 5 bis 20,
Die durchschnittliche Anzahl von Ethoxygruppen pro primärer und sekundärer Aminofunktion im polyalkoxylierten Polyamin beträgt vorzugsweise 10 bis 60, insbesondere 15 bis 30.

Gewünschtenfalls kann die endständige OH-Funktion Polyalkoxysubstituenten im polyalkoxylierten Polyamin teilweise oder vollständig mit einer C₁ - C₁₀, insbesondere C₁-C₃- Alkylgruppe verethert sein.

Erfindungsgemäß besonders bevorzugte polyalkoxylierte Polyamine können ausgewählt sein aus Polyamin umgesetzt mit 45EO pro primärer und sekundärer Aminofunktion, PEI`s umgesetzt mit 43EO pro primärer und sekundärer Aminofunktion, PEI`s umgesetzt mit 15EO + 5PO pro primärer und sekundärer Aminofunktion, PEI's umgesetzt mit 15PO + 30EO pro primärer und sekundärer Aminofunktion, PEI's umgesetzt mit 5PO + 39,5EO pro primärer und sekundärer Aminofunktion, PEI's umgesetzt mit 5PO + 15EO pro primärer und sekundärer Aminofunktion, PEI's umgesetzt mit 10PO + 35EO pro primärer und sekundärer Aminofunktion, PEI's umgesetzt mit 15PO + 30EO pro primärer und sekundärer Aminofunktion und PEI`s umgesetzt mit 15PO + 5EO pro primärer und sekundärer Aminofunktion. Ein ganz besonders bevorzugtes alkoxyliertes Polyamin ist PEI mit einem Gehalt von 10 bis 20 Stickstoffatomen umgesetzt mit 20 Einheiten EO pro primärer oder sekundärer Aminofunktion des Polyamins.

Ein weiterhin bevorzugter Gegenstand der Erfindung ist der Einsatz von polyalkoxylierten Polyaminen, die erhältlich sind durch Umsetzung von Polyaminen mit Ethylenoxid und gegebenenfalls zusätzlich Propylenoxid. Werden mit Ethylenoxid und Propylenoxyd polyalkyoxylierte Polyamine eingesetzt, beträgt der Anteil an Propylenoxid an der Gesamtmenge des Alkylenoxids bevorzugt 2 Mol-% bis 18 Mol-%, insbesondere 8 Mol-% bis 15 Mol-%.

Die flüssige Zusammensetzung enthält bezogen auf deren Gesamtgewicht polyalkoxylierte Polyamine bevorzugt in einer Gesamtmenge von 0,1 bis 10 Gew.-%, insbesondere von 0,5 bis 5,0 Gew.-%.

Zusätzlich zu den erfindungsgemäßen Inhaltsstoffen können die erfindungsgemäßen flüssigen Tensidzusammensetzungen weitere Inhaltsstoffe enthalten, die die anwendungstechnischen und/oder ästhetischen Eigenschaften des Waschmittels weiter verbessern. Im Rahmen der vorliegenden Erfindung enthält die erfindungsgemäße Zusammensetzung vorzugsweise zusätzlich einen oder mehrere Stoffe aus der Gruppe der Bleichmittel, Komplexbildner, Gerüststoffe, Elektrolyte, pH-Stellmittel, Parfüme, Parfümträger, Fluoreszenzmittel, Farbstoffe, Hydrotrope, Schauminhibitoren, Silikonöle, polymere Verdickungsmittel, Antiredepositionsmittel, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, weichmachenden Komponenten, UV-Absorber und Kombinationen hiervon .

Unter einem polymeren Verdickungsmittel wird erfindungsgemäß eine polymere Verbindung verstanden, die eine mittlere Molmasse (Gewichtsmittel M_{w}) von mehr als 1500 g/mol besitzt und die in einer Einsatzmenge von 0,1 Gew.-% die Viskosität der erfindungsgemäßen Zusammensetzung erhöht. Als polymeres Verdickungsmittel gelten erfindungsgemäß insbesondere Polyacrylate. Zu den Polyacrylaten zählen Polyacrylat- oder Polymethacrylat-Verdickern, wie beispielsweise die hochmolekularen mit einem Polyalkenylpolyether, insbesondere einem Allylether von Saccharose, Pentaerythrit oder Propylen, vernetzten Homopolymere der Acrylsäure (INCI- Bezeichnung gemäß "International Dictionary of Cosmetic Ingredients" der "The Cosmetic, Toiletry and Fragrance Association (CTFA)": Carbomer), die auch als Carboxyvinylpolymere bezeichnet werden. Solche Polyacrylsäuren sind u.a. von der Fa. 3V Sigma unter dem Handelsnamen Polygel^{®}, z.B. Polygel DA, und von der Fa. Noveon unter dem Handelsnamen Carbopol^{®} erhältlich, z.B. Carbopol 940 (Molekulargewicht ca. 4.000.000), Carbopol 941 (Molekulargewicht ca. 1. 250.000) oder Carbopol 934 (Molekulargewicht ca. 3. 000.000). Weiterhin fallen darunter folgende Acrylsäure-Copolymere: (i) Copolymere von zwei oder mehr Monomeren aus der Gruppe der Acrylsäure, Methacrylsäure und ihrer einfachen, vorzugsweise mit C₁₋₄-Alkanolen gebildeten, Ester (INCI Acrylates Copolymer), zu denen etwa die Copolymere von Methacrylsäure, Butylacrylat und Methylmethacrylat (CAS-Bezeichnung gemäß Chemical Abstracts Service: 25035-69-2) oder von Butylacrylat und Methylmethacrylat (CAS 25852-37-3) gehören und die beispielsweise von der Fa. Rohm & Haas unter den Handelsnamen Aculyn^{®} und Acusol^{®} sowie von der Firma Degussa (Goldschmidt) unter dem Handelsnamen Tego^{®} Polymer erhältlich sind, z.B. die anionischen nicht-assoziativen Polymere Aculyn 22, Aculyn 28, Aculyn 33 (vernetzt), Acusol 810, Acusol 823 und Acusol 830 (CAS 25852-37-3); (ii) vernetzte hochmolekulare Acrylsäure-Copolymere, zu denen etwa die mit einem Allylether der Saccharose oder des Pentaerythrits vernetzten Copolymere von C₁₀₋₃₀-Alkylacrylaten mit einem oder mehreren Monomeren aus der Gruppe der Acrylsäure, Methacrylsäure und ihrer einfachen, vorzugsweise mit C₁₋₄-Alkanolen gebildeten, Ester (INCI Acrylates/C10-30 Alkyl Acrylate Crosspolymer) gehören und die beispielsweise von der Fa. Noveon unter dem Handelsnamen Carbopol^{®} erhältlich sind, z.B. das hydrophobierte Carbopol ETD 2623 und Carbopol 1382 (INCI Acrylates/C10-30 Alkyl Acrylate Crosspolymer) sowie Carbopol Aqua 30 (früher Carbopol EX 473).

Es ist erfindungsgemäß bevorzugt, wenn die flüssige Zusammensetzung bezogen auf das Gesamtgewicht der Zusammensetzung polymere Verdickungsmittel in einer Gesamtmenge von 0 bis 0,1 Gew.-% insbesondere von 0 bis 0,05 Gew.-%, besonders bevorzugt von 0 bis 0,01 Gew.-% enthält. Ganz besonders bevorzugt ist die Zusammensetzung frei von polymeren Verdickungsmitteln.

Als Bleichmittel können alle Stoffe dienen, die durch Oxidation, Reduktion oder Adsorption Farbstoffe zerstören bzw. aufnehmen und dadurch Materialien entfärben. Dazu gehören unter anderem hypohalogenithaltige Bleichmittel, Wasserstoffperoxid, Perborat, Percarbonat, Peroxoessigsäure, Diperoxoazelainsäure, Diperoxododecandisäure und oxidative Enzymsysteme.

Als Gerüststoffe, die in der erfindungsgemäßen Zusammensetzung enthalten sein können, sind insbesondere Silikate, Aluminiumsilikate (insbesondere Zeolithe), Carbonate, Salze organischer Di- und Polycarbonsäuren sowie Mischungen dieser Stoffe zu nennen.

Organische Gerüststoffe, welche in der erfindungsgemäßen Zusammensetzung vorhanden sein können, sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren (inkl. MGDA und/oder GLDA), sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Als Gerüststoffe sind weiter polymere Polycarboxylate geeignet. Dies sind beispielsweise die Alkalimetallsalze der Polyacrylsäure oder der Polymethacrylsäure, zum Beispiel solche mit einer relativen Molekülmasse von 600 bis 750.000 g / mol.

Geeignete Polymere sind insbesondere Polyacrylate, die bevorzugt eine Molekülmasse von 1.000 bis 15.000 g / mol aufweisen. Aufgrund ihrer überlegenen Löslichkeit können aus dieser Gruppe wiederum die kurzkettigen Polyacrylate, die Molmassen von 1.000 bis 10.000 g / mol, und besonders bevorzugt von 1.000 bis 5.000 g / mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Zur Verbesserung der Wasserlöslichkeit können die Polymere auch Allylsulfonsäuren, wie Allyloxybenzolsulfonsäure und Methallylsulfonsäure, als Monomer enthalten.

In den erfindungsgemäßen flüssigen Zusammensetzungen werden bevorzugt lösliche Gerüststoffe, wie beispielsweise Citronensäure, oder Acrylpolymere mit einer Molmasse von 1.000 bis 5.000 g / mol eingesetzt.

In verschiedenen Ausführungsformen der Erfindung enthalten die Mittel ferner ein Komplexierungsmittel ausgewählt aus der Gruppe bestehend aus Ethylendiamindibernsteinsäure (EDDS) und Ethylendiamintetraessigsäure (EDTA). Besonders bevorzugt ist eine Mischung aus Ethylendiamindibernsteinsäure (EDDS) und Ethylendiamintetraessigsäure (EDTA). In weiter bevorzugten Ausführungsformen umfasst die erfindungsgemäße Zusammensetzung (a) Ethylendiamintetraessigsäure (EDTA) in einer Menge von 0,5 - 4 Gew.-%, bevorzugt in einer Menge von 1 Gew.-% und/oder (b) Ethylendiamindibernsteinsäure (EDDS) in einer Menge von 0,5 - 4 Gew.-%, bevorzugt in einer Menge von 1 Gew.-%; ganz besonders bevorzugt 1 Gew.-% EDTA und 1 Gew.-% EDDS. Es wurde überraschenderweise gefunden, dass die Enzyme in den erfindungsgemäßen Zusammensetzungen auch in Gegenwart vergleichsweise hoher Konzentrationen dieser Komplexierungsmittel stabil bleiben.

Ein zweiter Erfindungsgegenstand ist die Verwendung einer flüssigen Tensidzusammensetzung des ersten Erfindungsgegenstandes in einem Verfahren zur Textilwäsche.

Ein dritter Gegenstand der Erfindung ist ein Verfahren zur Textilwäsche, umfassend die Bereitstellung einer Waschflotte durch
(i) Dosierung einer flüssigen Tensidzusammensetzung des ersten Erfindungsgegenstandes,
(ii) Vermischen dieser Dosis in mindestens ein Lösemittel, insbesondere Wasser, und
(iii) in Kontaktbringen der resultierenden Mischung mit mindestens einem Textil.

Eine Waschflotte ist erfindungsgemäß zumindest die Gesamtmenge der unter (i) und (iii) eingesetzten Komponenten.

Verfahren zur Textilreinigung zeichnen sich im allgemeinen dadurch aus, dass in mehreren Verfahrensschritten verschiedene reinigungsaktive Substanzen auf das Reinigungsgut aufgebracht und nach der Einwirkzeit abgewaschen werden, oder dass das Reinigungsgut in sonstiger Weise mit einer Zusammensetzung des ersten Erfindungsgegenstandes oder einer Lösung dieser Zusammensetzung behandelt wird. Es ist erfindungsgemäß bevorzugt, wenn im Rahmen einer Vorbehandlung von Textilien zunächst auf ausgewählte beschmutze Stellen des Textils zumindest ein Teil der besagten flüssigen Zusammensetzung direkt aufgetragen wird und anschließend nach einer Einwirkzeit (von bevorzugt 30 bis 300 Sekunden) das mindestens eine Lösemittel aus Schritt (ii), der Rest der Textilien aus Schritt (iii) und gegebenenfalls der Rest der besagten flüssigen Zusammensetzung unter Bereitstellung der Waschflotte kombiniert werden.

Wird der Waschflotte das mindestens eine Lösemittel des erfindungsgemäßen Verfahrens zugeführt, so ist es erfindungsgemäß bevorzugt, einen Volumenteil der besagten flüssigen Zusammensetzung mit 5 bis 3000 Volumenteilen des mindestens einen Lösemittels zu kombinieren.

### Beispiele

### Beispiel 1: Waschtest

### Verwendete Waschmittelmatrix

| **Handels- oder chemischer Name** | **%** | **Waschmittel 1** | **Waschmittel 2** |
|---|---|---|---|
| dest. Wasser | 100 | Rest | |
| 1 ,2-Propanediol (tech. Grad) | 100 | 0-5 | |
| Natriumhydroxid (50% Lsg.) | 50 | 2,75 | |
| Borsäure | 100 | 0-2 | |
| Zitronensäure (wasserfrei) | 100 | 0-5 | |
| C12-18 Fettalkoholether 7EO | 100 | 3-7 | |
| LAS (Stepan Biosoft S118) | 96 | 2-6 | |
| C12-18 Seife | 100 | 0-4 | |
| EDTA | 40 | 0-2 | 0-2 |
| EDDS | 37 | - | 0-2 |
| Natriumlaurylethersulfat 2EO | 70 | 10-20 | |
| C12-18 Fettalkoholethersulfat 7EO, Na-Salz | 81 | 1,5 - 4,5 | |
| Ethoxyliertes PEI (Sokalan HP20) | 80 | 0-2 | |
| Ethanol 96% (MEK denaturiert) | 93 | 0-5 | |
| Entschäumer | 100 | 0,04 | |
| Natriumformiat (Lsg. 40%) | 40 | 0,3 | |
| Optischer Aufheller | 90 | 0-0,2 | |
| Amylase | 100 | 0-1 | |
| Cellulase 1 | 100 | 0-0,5 | |
| Cellulase 2 | 100 | 0-0,5 | |
| Lipase | 100 | - | 0-0,5 |
| Mannanase | 100 | 0-0,5 | |
| Protease | 100 | 0-2 | |
| Parfüm | 100 | 0-2 | |
| Liquitint Blue HP | t.q. | 0,0022 | |

### Waschtest zur Bestimmung der Waschleistung der Amylase gemäß SEQ ID NO:1

Die Referenzamylase ("current Amylase") und die erfindungsgemäße Amylase nach SEQ ID NO:1 ("New Amylase") wurden für 4 Wochen bei einer Temperatur von 30°C in der oben genannten Waschmittelmatrix (Waschmittel 2) gelagert. Anschließend wurde jeweils ihr Enzymmonitor ΔY in Frontloader- und Toploaderwaschmaschinen gemessen.

### Anschmutzungen:

| | | |
|---|---|---|
| 1. | CFT C03 | (Milchschokolade/schwarzer Kohlenstoff) |
| 2. | CFT C05 | (Blut/Milch/Tinte) |
| 3. | CFT CS02 | (Kakao) |
| 4. | CFT CS29 | (Tapiokastärke, gefärbt) |
| 5. | EMPA 111 | (Blut) |
| 6. | EMPA 112 | (Kakao) |
| 7. | EMPA 117 | (Blut/Milch/Tinte) |
| 8. | EMPA 160 | (Schokoladencreme) |
| 9. | EMPA 162 | (Maisstärke, gefärbt) |
| 10. | EMPA163 | (Haferbrei) |
| 11. | EMPA 165 | (Schokoladenpudding) |
| 12. | H-MR-B | (Milch/schwarzer Kohlenstoff) |
| 13. | WFK10EG | (Eigelb) |
| 14. | WFK 10N | (ganzes Ei/Pigment) |
| 15. | WFK 10R | (Maisstärke/Pigment) |

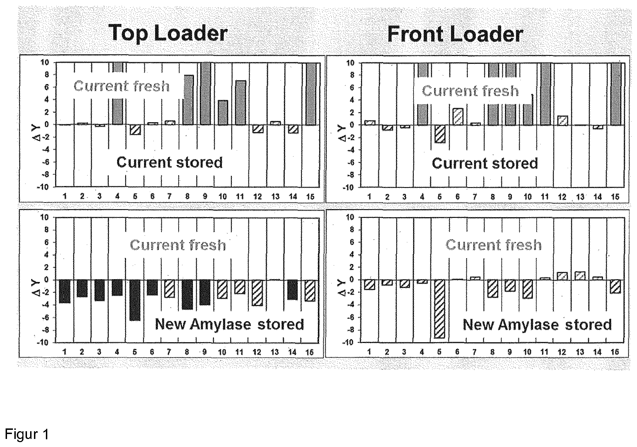

Die im Stand der Technik verwendete Amylase ("current Amylase") zeigt einen deutlichen Abfall der Waschleistung nach Lagerung (siehe Figur 1). Im Gegensatz dazu zeigt die erfindungsgemäße Amylase ("New Amylase"; SEQ ID NO:1) eine signifikant verbesserte Waschleistung nach Lagerung.

## Patentansprüche

1. Flüssige Tensidzusammensetzung, enthaltend bezogen auf das Gesamtgewicht der Zusammensetzung
a) eine Gesamtmenge von 2,0 bis 8,0 Gew.-% C₉-C₂₀-Alkylbenzolsulfonat, und
b) eine Gesamtmenge von 10,0 bis 18,0 Gew.-% R¹-O-(CH₂CH₂O)ₙ-SO₃M,
worin R¹ für eine C₁₂₋₁₈-Alkylgruppe steht, n für eine Zahl von 2 bis 3 steht und M für ein einwertiges Kation steht, und
c) eine Gesamtmenge von 1,0 bis 6,0 Gew.-% R²-O-(CH₂CH₂O)ₘ-SO₃M',
worin R² für eine C₁₂₋₁₈-Alkylgruppe steht, m für eine Zahl von 7 bis 8 steht und M' für ein einwertiges Kation steht, und
d) eine Gesamtmenge von 2,0 bis 10,0 Gew.-%, vorzugsweise 2,5 bis 7,5 Gew.-%, weiter bevorzugt 4,0 bis 6,0 Gew.-% Fettalkoholethoxylat(e), und
e) Wasser, und
f) mindestens eine Amylase,
wobei die Amylase eine Aminosäuresequenz umfasst, die mindestens 75 % Sequenzidentität mit der in SEQ ID NO:1 angegebenen Aminosäuresequenz über deren Gesamtlänge aufweist.

2. Flüssige Tensidzusammensetzung nach Anspruch 1, **dadurch gekennzeichnet, dass** die Amylase eine Aminosäuresequenz umfasst, die zu der in SEQ ID NO:1 angegebenen Aminosäuresequenz über deren Gesamtlänge zu mindestens 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 98,8%, 99,0%, 99,2%, 99,4%, 99,6%, 99,8% oder zu 100% identisch ist.

3. Flüssige Tensidzusammensetzung, nach einem der Ansprüche 1 oder 2, **dadurch gekennzeichnet, dass** die Alkylbenzolsulfonate gemäß a) eine oder mehrere Verbindungen der Formel a umfassen, 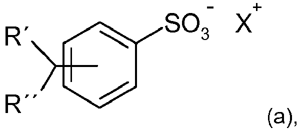 in der R' und R" zusammen 8 bis 19, vorzugsweise 9 bis 14 und insbesondere 9 bis 12 C-Atome enthalten und X⁺ für ein einwertiges Kation steht, insbesondere für Na⁺, K⁺, HOCH₂CH₂NH₃⁺, (HO-CH₂CH₂)₃NH⁺.

4. Flüssige Tensidzusammensetzung nach einem der Ansprüche 1 bis 3, wobei das Fettalkoholethoxylat gemäß d) R³-O-(CH₂CH₂O)ₒ-H ist, worin R³ für eine C₁₂₋₁₈ Alkylgruppe steht und o für eine Zahl von 7 bis 8 steht.

5. Flüssige Tensidzusammensetzung nach einem der Ansprüche 1 bis 4, **dadurch gekennzeichnet, dass**
(a) n = 2 ist;
(b) m = 7 ist;
(c) M = Na⁺ ist; und/oder
(d) M' = Na⁺ ist.

6. Flüssige Tensidzusammensetzung nach einem der Ansprüche 1 bis 5, **dadurch gekennzeichnet, dass** die Zusammensetzung ferner eine Protease enthält, wobei die Protease vorzugsweise eine Aminosäuresequenz umfasst, die mindestens 70 % Sequenzidentität mit der in SEQ ID NO:2 angegebenen Aminosäuresequenz über deren Gesamtlänge aufweist.

7. Flüssige Tensidzusammensetzung nach einem der Ansprüche 1 bis 6, **dadurch gekennzeichnet, dass** das Gewichtsverhältnis der Tensidkomponente a) zur Tensidkomponente b) 1:9 bis 1:2, bevorzugt 1:6 bis 1:3, besonders bevorzugt 1:5 bis 1:3, beträgt.

8. Flüssige Tensidzusammensetzung nach einem der Ansprüche 1 bis 7, **dadurch gekennzeichnet, dass** sie zusätzlich einen oder mehrere Stoffe aus der Gruppe der Bleichmittel, Komplexbildner, Gerüststoffe, Elektrolyte, pH-Stellmittel, Parfüme, Parfümträger, Fluoreszenzmittel, Farbstoffe, Hydrotrope, Schauminhibitoren, Silikonöle, polymere Verdickungsmittel, Antiredepositionsmittel, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, weichmachenden Komponenten sowie UV-Absorber sowie Kombinationen hiervon enthält.

9. Verwendung einer flüssigen Tensidzusammensetzung gemäß einem der Ansprüche 1 bis 8 in einem Verfahren zur Textilwäsche.

10. Verfahren zur Textilwäsche, umfassend die Bereitstellung einer Waschflotte durch
(i) Dosierung einer flüssigen Tensidzusammensetzung gemäß einem der Ansprüche 1 bis 7,
(ii) Vermischen dieser Dosis in mindestens ein Lösemittel, insbesondere Wasser, und
(iii) in Kontaktbringen der resultierenden Mischung mit mindestens einem Textil.

## Claims

1. A liquid surfactant composition, containing, based on the total weight of the composition,
a) a total amount of from 2.0 to 8.0 wt.% C₉-C₂₀ alkylbenzene sulfonate, and
b) a total amount of from 10.0 to 18.0 wt.% R¹-O-(CH₂CH₂O)ₙ-SO₃M, in which R¹ represents a C₁₂₋₁₈ alkyl group, n represents a number from 2 to 3, and M represents a monovalent cation, and
c) a total amount of from 1.0 to 6.0 wt.% R²-O-(CH₂CH₂O)ₘ-SO₃M', in which R² represents a C₁₂₋₁₈ alkyl group, m represents a number from 7 to 8, and M' represents a monovalent cation, and
d) a total amount of from 2.0 to 10.0 wt.%, preferably 2.5 to 7.5 wt.%, more preferably 4.0 to 6.0 wt.%, fatty alcohol ethoxylate(s), and
e) water, and
f) at least one amylase, wherein the amylase has an amino acid sequence which is at least 75% identical to the amino acid sequence specified in SEQ ID NO:1 over the entire length thereof.

2. The liquid surfactant composition according to claim 1, **characterized in that** the amylase has an amino acid sequence which is at least 75%, 76%, 77%, 78%, 79%, 80%, 81%, 82%, 83%, 84%, 85%, 86%, 87%, 88%, 89%, 90%, 90.5%, 91%, 91.5%, 92%, 92.5%, 93%, 93.5%, 94%, 94.5%, 95%, 95.5%, 96%, 96.5%, 97%, 97.5%, 98%, 98.5%, 98.8%, 99.0%, 99.2%, 99.4%, 99.6% or 99.8%, or 100%, identical to the amino acid sequence specified in SEQ ID NO:1 over the entire length thereof.

3. The liquid surfactant composition according to one of claims 1 or 2, **characterized in that** the alkylbenzene sulfonate according to a) comprises one or more compounds of formula a, 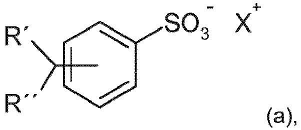 in which R' and R" together contain 8 to 19, preferably 9 to 14, and in particular 9 to 12, C atoms and X⁺ represents a monovalent cation, in particular Na⁺, K⁺, HO-CH₂CH₂NH₃⁺, or (HO-CH₂CH₂)₃NH⁺.

4. The liquid surfactant composition according to one of claims 1 to 3, wherein the fatty alcohol ethoxylate according to d) is R³-O-(CH₂CH₂O)ₒ-H, in which R³ represents a C₁₂₋₁₈ alkyl group and o represents a number from 7 to 8.

5. The liquid surfactant composition according to one of claims 1 to 4, **characterized in that**
(a) n = 2;
(b) m = 7;
(c) M = Na⁺; and/or
(d) M' = Na⁺.

6. The liquid surfactant composition according to one of claims 1 to 5, **characterized in that** the composition further contains a protease, the protease preferably having an amino acid sequence which is at least 70% identical to the amino acid sequence specified in SEQ ID NO:2 over the total length thereof.

7. The liquid surfactant composition according to one of claims 1 to 6, **characterized in that** the weight ratio of surfactant component a) to surfactant component b) is 1:9 to 1:2, preferably 1:6 to 1:3, particularly preferably 1:5 to 1:3.

8. The liquid surfactant composition according to one of claims 1 to 7, **characterized in that** it additionally contains one or more substances from the group of bleaching agents, complexing agents, builders, electrolytes, pH adjusters, perfumes, perfume carriers, fluorescing agents, dyes, hydrotropic substances, foam inhibitors, silicone oils, polymeric thickening agents, antiredeposition agents, shrinkage preventers, anti-crease agents, dye transfer inhibitors, antimicrobial active ingredients, germicides, fungicides, antioxidants, preservatives, corrosion inhibitors, antistatic agents, bittering agents, ironing aids, repellents and impregnating agents, anti-swelling and anti-slip agents, softening components and UV absorbers, and combinations thereof.

9. The use of a liquid surfactant composition according to one of claims 1 to 8 in a method for washing textiles.

10. A method for washing textiles, comprising providing a washing liquor by
(i) dosing a liquid surfactant composition according to one of claims 1 to 7,
(ii) mixing this dosage into at least one solvent, in particular water, and
(iii) bringing the resulting mixture into contact with at least one textile.

## Revendications

1. Composition tensioactive liquide, contenant, par rapport au poids total de la composition,
a) une quantité totale allant de 2,0 à 8,0 % en poids de sulfonate d'alkylbenzène en C₉-C₂₀, et
b) une quantité totale allant de 10,0 à 18,0 % en poids de R¹-O-(CH₂CH₂O)ₙ-SO₃M,
où R¹ représente un groupe alkyle en C₁₂₋₁₈, n représente un nombre allant de 2 à 3 et M représente un cation monovalent, et
c) une quantité totale allant de 1,0 à 6,0 % en poids de R²-O-(CH₂CH₂O)ₘ-SO₃M',
où R² représente un groupe alkyle en C₁₂₋₁₈, m représente un nombre allant de 7 à 8 et M' représente un cation monovalent, et
d) une quantité totale allant de 2,0 à 10,0 % en poids, de préférence de 2,5 à 7,5 % en poids, de manière particulièrement préférée de 4,0 à 6,0 % en poids d'éthoxylates d'alcool gras, et
e) de l'eau, et
f) au moins une amylase,
dans laquelle l'amylase comprend une séquence d'acides aminés qui présente, sur sa longueur totale, au moins 75 % d'identité de séquence avec la séquence d'acides aminés indiquée dans la SEQ ID NO : 1.

2. Composition tensioactive liquide selon la revendication 1,
**caractérisée en ce que** l'amylase comprend une séquence d'acides aminés qui, sur sa longueur totale, est identique à au moins 75 %, 76 %, 77 %, 78 %, 79 %, 80 %, 81 %, 82 %, 83 %, 84 %, 85 %, 86 %, 87 %, 88 %, 89 %, 90 %, 90,5 %, 91 %, 91,5 %, 92 %, 92,5 %, 93 %, 93,5 %, 94 %, 94,5 %, 95 %, 95,5 %, 96 %, 96,5 %, 97 %, 97,5 %, 98 %, 98,5 %, 98,8 %, 99,0 %, 99,2 %, 99,4 %, 99,6 %, 99,8 % ou à 100 % à la séquence d'acides aminés indiquée dans la SEQ ID NO : 1.

3. Composition tensioactive liquide selon l'une des revendications 1 ou 2, **caractérisée en ce que** les sulfonates d'alkylbenzène selon a) comprennent un ou plusieurs composés de formule a, 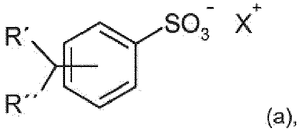 où R' et R" contiennent ensemble 8 à 19, de préférence 9 à 14 et en particulier 9 à 12 atomes de carbone et X⁺ représente un cation monovalent, en particulier Na⁺, K⁺, HO-CH₂CH₂NH₃⁺, (HO-CH₂CH₂)₃NH⁺.

4. Composition tensioactive liquide selon l'une des revendications 1 à 3, dans laquelle l'éthoxylate d'alcool gras selon d) est R³-O-(CH₂CH₂O)ₒ-H, où R³ représente un groupe alkyle en C₁₂₋₁₈ et ο représente un nombre allant de 7 à 8.

5. Composition tensioactive liquide selon l'une des revendications 1 à 4, **caractérisée en ce que**
(a) n = 2 ;
(b) m = 7 ;
(c) M = Na⁺ ; et/ou
(d) M' = Na+.

6. Composition tensioactive liquide selon l'une des revendications 1 à 5, **caractérisée en ce que** la composition contient en outre une protéase, dans laquelle la protéase comprend de préférence une séquence d'acides aminés qui présente, sur sa longueur totale, au moins 70 % d'identité de séquence avec la séquence d'acides aminés indiquée dans la SEQ ID NO : 2.

7. Composition tensioactive liquide selon l'une des revendications 1 à 6, **caractérisée en ce que** le rapport pondéral du composant tensioactif a) au composant tensioactif b) va de 1:9 à 1:2, préférentiellement de 1:6 à 1:3, de manière très particulièrement préférée de 1:5 à 1:3.

8. Composition tensioactive liquide selon l'une des revendications 1 à 7, **caractérisée en ce qu'**elle contient en outre une ou plusieurs substances du groupe comprenant agents de blanchiment, agents complexants, adjuvants, électrolytes, agents régulateurs de pH, parfums, supports de parfums, agents fluorescents, colorants, hydrotropes, inhibiteurs de mousse, huiles de silicone, agents épaississants polymères, agents d'antiredéposition, agents antirétrécissement, agents antifroissage, inhibiteurs de transfert de couleur, substances actives antimicrobiennes, germicides, fongicides, antioxydants, conservateurs, inhibiteurs de corrosion, antistatiques, amérisants, agents d'aide au repassage, agents d'hydrofugation et d'imprégnation, agents empêchant le gonflement et l'éraillage, composants assouplissants ainsi qu'absorbeurs d'UV ainsi que des combinaisons de ceux-ci.

9. Utilisation d'une composition tensioactive liquide selon l'une des revendications 1 à 8 dans un procédé de lavage de textiles.

10. Procédé de lavage de textiles, comprenant la mise à disposition d'un bain de lavage par
(i) le dosage d'une composition tensioactive liquide selon l'une des revendications 1 à 7,
(ii) le mélange de ladite dose dans au moins un solvant, en particulier de l'eau, et
(iii) la mise en contact du mélange résultant avec au moins un textile.
